(19) Europäisches Patentamt
European Patent Office
Office européen des brevets

(11) **EP 4 509 904 A1**

(12) **EUROPEAN PATENT APPLICATION**
published in accordance with Art. 153(4) EPC

(43) Date of publication:
**19.02.2025 Bulletin 2025/08**

(21) Application number: **23788168.5**

(22) Date of filing: **29.03.2023**

(51) International Patent Classification (IPC):
**G02B 30/56** (2020.01)          **G02B 17/06** (2006.01)
**H04N 13/302** (2018.01)

(52) Cooperative Patent Classification (CPC):
**G02B 17/06; G02B 30/56; H04N 13/302**

(86) International application number:
**PCT/JP2023/012898**

(87) International publication number:
**WO 2023/199748 (19.10.2023 Gazette 2023/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.04.2022  JP 2022066561
28.02.2023  JP 2023030396**

(71) Applicant: **Kyocera Corporation
Kyoto-shi, Kyoto 612-8501 (JP)**

(72) Inventors:
• **SHIMOSE, Kazuki**
  **Kyoto-shi, Kyoto 612-8501 (JP)**
• **KAWANISHI, Hiroyoshi**
  **Kyoto-shi, Kyoto 612-8501 (JP)**
• **TADAUCHI, Ryo**
  **Kyoto-shi, Kyoto 612-8501 (JP)**

(74) Representative: **TBK
Bavariaring 4-6
80336 München (DE)**

(54) **AERIAL IMAGE DISPLAY DEVICE**

(57)    An aerial image display device includes a display (2), a convex mirror (4), and a concave mirror (5). The convex mirror reflects image light emitted from the display. The concave mirror reflects, in a direction different from a direction toward the convex mirror, the image light (L) reflected from the convex mirror to form an aerial image (R) as a real image. The concave mirror (5) has a greater curvature than the convex mirror (4).

FIG. 1A

**Description**

TECHNICAL FIELD

The present disclosure relates to an aerial image display device.

BACKGROUND OF INVENTION

A known aerial image display device is described in, for example, Patent Literature 1.

CITATION LIST

PATENT LITERATURE

Patent Literature 1: Japanese Unexamined Patent Application Publication No. 2011-253128

SUMMARY

An aerial image display device according to an aspect of the present disclosure includes a display, a convex mirror that reflects image light emitted from the display, and a concave mirror that reflects, in a direction different from a direction toward the convex mirror, the image light reflected from the convex mirror to form an aerial image as a real image. The concave mirror has a greater curvature than the convex mirror.

An aerial image display device according to another aspect of the present disclosure includes a display, a first concave mirror that reflects, in a direction different from a direction toward the display, image light emitted from the display, a convex mirror that reflects, in a direction different from a direction toward the first concave mirror, the image light reflected from the first concave mirror, and a second concave mirror that reflects, in a direction different from a direction toward the convex mirror, the image light reflected from the convex mirror to form an aerial image as a real image. In the aerial image display device, Sa1 > Sa2 > Sb, where Sa1 is a curvature of the first concave mirror, Sb is a curvature of the convex mirror, and Sa2 is a curvature of the second concave mirror.

An aerial image display device according to another aspect of the present disclosure includes a display, and a reflective optical system that reflects image light emitted from the display to form an aerial image as a real image. The aerial image has a distortion less than or equal to 5%, and has a contrast value greater than or equal to 0.2 at a spatial frequency of 3 to 10 cycles/mm when the contrast value is expressed with a modulation transfer function normalized to have a maximum value of 1.

An aerial image display device according to another aspect of the present disclosure includes a display, and a reflective optical system that reflects image light emitted from the display to form an aerial image as a real image. The reflective optical system includes a first concave mirror that reflects, in a direction different from a direction toward the display, the image light emitted from the display, and a second concave mirror that reflects, in a direction different from a direction toward the first concave mirror, the image light reflected from the first concave mirror to form the aerial image as the real image. The first concave mirror has a greater curvature than the second concave mirror.

BRIEF DESCRIPTION OF THE DRAWINGS

The objects, features, and advantages of the present disclosure will become more apparent from the following detailed description and the drawings.

FIG. 1A is a side view of an aerial image display device according to an embodiment of the present disclosure illustrating its main components.
FIG. 1B is a side view of an aerial image display device according to another embodiment of the present disclosure illustrating its main components.
FIG. 2 is a diagram describing the curvature of a first concave mirror in the aerial image display device in FIG. 1B.
FIG. 3 is a diagram of a result of simulation illustrating an example aerial image viewed by a user of the aerial image display device in FIG. 1B.
FIG. 4 is a diagram of a result of simulation illustrating an example aerial image viewed by the user of the aerial image display device in FIG. 1B.
FIG. 5 is a graph of a modulation transfer function of the aerial image display device in FIG. 1B.
FIG. 6 is a graph of the modulation transfer function of the aerial image display device in FIG. 1B.
FIG. 7 is a side view of an aerial image display device according to another embodiment of the present disclosure illustrating its main components.

FIG. 8 is a diagram of a result of simulation illustrating an example aerial image viewed by the user of the aerial image display device in FIG. 7.

FIG. 9 is a graph of a modulation transfer function of the aerial image display device in FIG. 7.

FIG. 10 is a graph of the modulation transfer function of the aerial image display device in FIG. 7.

FIG. 11 is a side view of an aerial image display device according to another embodiment of the present disclosure illustrating its main components.

FIG. 12 is a diagram of an example aerial image viewed by a user of the aerial image display device in FIG. 11.

FIG. 13 is a diagram of an example aerial image viewed by the user of the aerial image display device in FIG. 11.

FIG. 14 is a diagram of a result of simulation illustrating an example aerial image viewed by the user of the aerial image display device in FIG. 11.

FIG. 15 is a graph of a modulation transfer function of the aerial image display device in FIG. 11.

FIG. 16 is a graph of the modulation transfer function of the aerial image display device in FIG. 11.

FIG. 17 is a side view of an aerial image display device according to another embodiment of the present disclosure illustrating its main components.

FIG. 18 is a diagram describing the curvature of a first concave mirror in the aerial image display device in FIG. 17.

FIG. 19A is a perspective view of the aerial image display device in FIG. 17 illustrating its main components.

FIG. 19B is a partial perspective view of the aerial image display device in FIG. 17 describing a mechanism for distortion.

FIG. 20 is a diagram of a result of simulation illustrating an example aerial image viewed by a user of the aerial image display device in FIG. 17.

FIG. 21 is a diagram of a result of simulation illustrating an example aerial image viewed by the user of the aerial image display device in FIG. 17.

FIG. 22 is a diagram of a result of simulation illustrating an example aerial image viewed by the user of the aerial image display device in FIG. 17.

FIG. 23 is a side view of the aerial image display device in FIG. 1B illustrating its main components for describing the spread of light beams.

FIG. 24 is a graph showing the relationship between the light beam angle and the contrast ratio of a liquid crystal display as a display.

FIG. 25A is a side view of a display in an aerial image display device according to another embodiment of the present disclosure, including a viewing angle control film in addition to the components of the aerial image display device in FIG. 1B.

FIG. 25B is a side view of a display in an aerial image display device according to another embodiment of the present disclosure, including a viewing angle control film in addition to the components of the aerial image display device in FIG. 1B.

FIG. 26 is a perspective view of a modulation transfer function (MTF) measurement device including an aerial image display device according to an embodiment of the present disclosure.

FIG. 27 is a cross-sectional view of the aerial image display device included in the MTF measurement device in FIG. 26.

FIG. 28 is a partially enlarged view of one example test pattern for measuring the MTF of an aerial image formed by the aerial image display device.

FIG. 29 is a partially enlarged view of a captured image of a test pattern captured by an imaging device.

FIG. 30 is a partially enlarged view of a captured image of a test pattern captured by the imaging device.

FIG. 31 is a graph of a luminance distribution waveform as a line spread function calculated from the captured image in FIG. 30.

FIG. 32 is a graph of an MTF calculated from the line spread function in FIG. 31.

FIG. 33 is a diagram of another example test pattern for measuring the MTF of an aerial image formed by the aerial image display device.

FIG. 34 is a diagram of a captured image of a test pattern captured by the imaging device.

DESCRIPTION OF EMBODIMENTS

An aerial image display device described in Patent Literature 1 forms an aerial image from light emitted from a display using an optical element such as a retroreflector and a polarizing filter. However, some of such aerial images viewed by a user may be distorted or may have lower luminance. Aerial image display devices with higher display quality of aerial images are thus awaited.

One or more embodiments of the present disclosure will now be described with reference to the drawings. The drawings used herein illustrate the main components of an aerial image display device according to one or more embodiments of the present disclosure. The aerial image display device may include known components such as an optical element holder and a camera (both not illustrated). The drawings used herein are schematic and are not necessarily drawn to scale relative to the actual size of each component. Some of the drawings use an orthogonal XYZ coordinate system defined for convenience.

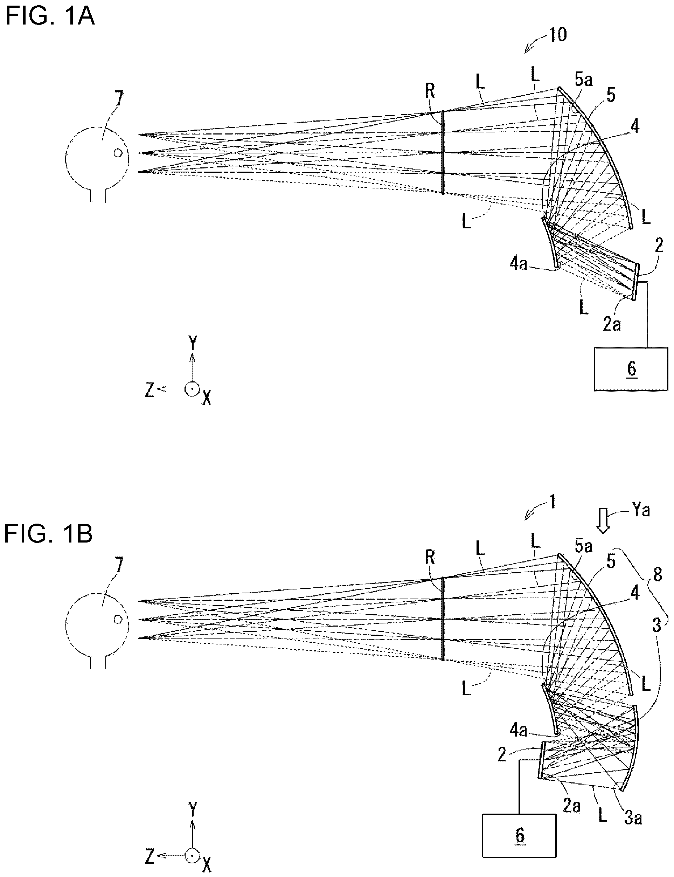

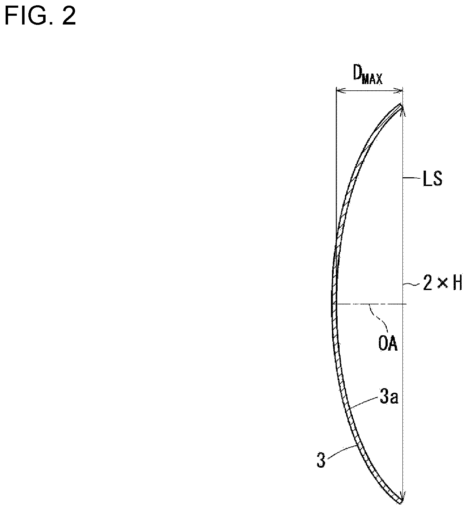

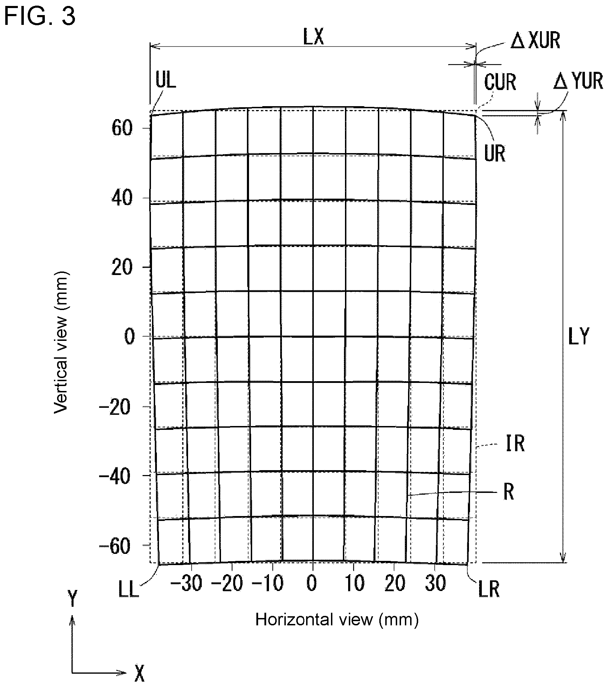

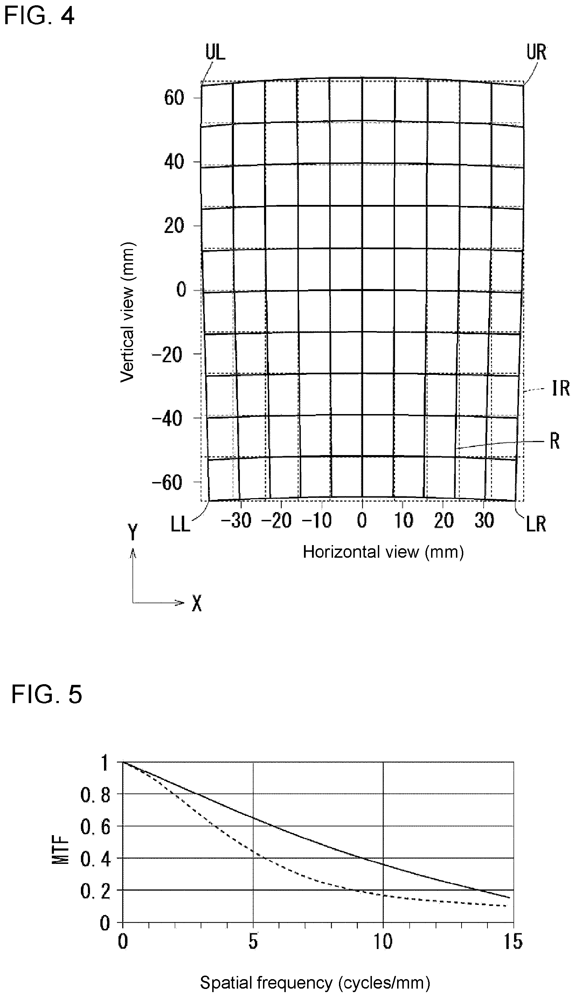

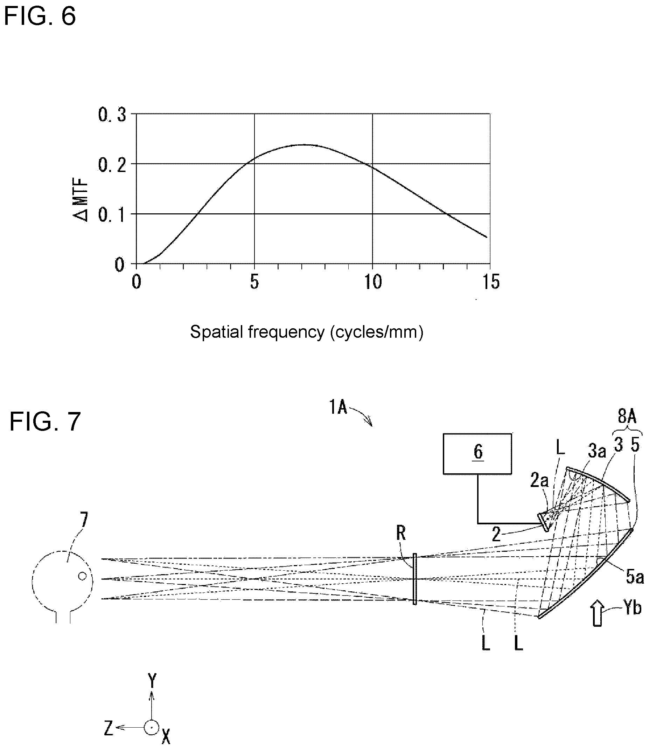

FIGs. 1A and 1B are side views of an aerial image display device according to one or more embodiments of the present disclosure illustrating its main components. FIG. 2 is a diagram describing the curvature of a first concave mirror in the aerial image display device in FIG. 1B. FIG. 3 is a diagram of an example aerial image viewed by a user of the aerial image display device in FIG. 1B. FIG. 4 is a diagram of an example aerial image viewed by the user of the aerial image display device in FIG. 1B. FIGs. 5 and 6 are graphs of a modulation transfer function of the aerial image display device in FIG. 1B.

In the present embodiment, as illustrated in FIG. 1A, an aerial image display device 10 includes a display 2, a convex mirror 4 for reflecting image light L emitted from the display 2, and a concave mirror 5 (also referred to as a concave image forming mirror 5) for reflecting, in a direction different from a direction toward the convex mirror 4, the image light L reflected from the convex mirror 4 to form an aerial image R as a real image. The concave image forming mirror 5 has a greater curvature than the convex mirror 4. This structure produces the effects described below. The convex mirror 4 has a smaller curvature than the concave image forming mirror 5. This structure reduces the likelihood that the convex mirror 4 increases the distortion of the aerial image R, unlike the convex mirror 4 that expands the image light L at the highest ratio and thus is likely to increase the distortion of the aerial image R. This structure thus increases the display quality of the aerial image R. For the convex mirror 4 having the smaller curvature, the image light L reflected from the convex mirror 4 is less likely to spread out. This can reduce an increase in the size of the concave image forming mirror 5 for reflecting the image light L reflected from the convex mirror 4. The curvature of the convex mirror 4 and the curvature of the concave image forming mirror 5 will be described later.

In the present embodiment, the aerial image display device 10 in FIG. 1A may include another optical element between the display 2 and the convex mirror 4. For example, as illustrated in FIG. 1B, the aerial image display device 10 may include a first concave mirror 3 between the display 2 and the convex mirror 4. Note that, when another optical element is between the display 2 and the convex mirror 4, the optical element may be, for example, a plane mirror, a convex mirror, a holographic element, a polarizer, or a reflective polarizer, other than the concave mirror.

In another embodiment, as illustrated in FIG. 1B, an aerial image display device 1 includes the display 2, the first concave mirror 3, the convex mirror 4, and a second concave mirror 5 as a concave image forming mirror.

The display 2 includes a display surface 2a and displays an image as the traveling image light L on the display surface 2a. In other words, the display 2 emits the image light L from the display surface 2a.

In the structure in FIG. 1B, the display surface 2a of the display 2 is located not to face the eyes of a user 7. More specifically, the display surface 2a of the display 2 is not directed to the eyes of the user 7, but is directed opposite to the eyes of the user 7. In this structure, the display surface 2a of the display 2 is invisible to the user 7 when the viewer 7 views into the aerial image display device 1 from above between the second concave mirror 5 and the aerial image R. This reduces the likelihood that the user 7 directly views the image light L emitted from the display surface 2a and feels less comfortable by directly viewing the image on the display surface 2a. The aerial image display device 1 can thus have higher display quality.

The display 2 may be a transmissive display. The transmissive display may be, for example, a liquid crystal display including a backlight and a liquid crystal panel. The backlight may be a direct backlight including multiple light sources arranged two-dimensionally on a rear surface of the liquid crystal panel. The backlight may be an edge-lit backlight including multiple light sources arranged on an outer periphery of the liquid crystal panel. The edge-lit backlight may include, for example, a lens array, a light guide plate, or a diffuser plate for irradiating the liquid crystal panel uniformly. Examples of the light sources in the backlight may include light-emitting diode (LED) elements, cold cathode fluorescent lamps, halogen lamps, and xenon lamps.

The liquid crystal panel may be a known liquid crystal panel. Examples of the known liquid crystal panel include an in-plane switching (IPS) panel, a fringe field switching (FFS) panel, a vertical alignment (VA) panel, and an electrically controlled birefringence (ECB) panel.

The display 2 may be a self-luminous display including a light emitter such as an LED element, an organic electroluminescent (OEL) element, an organic light-emitting diode (OLED) element, and a semiconductor laser diode (LD) element, other than the transmissive display.

Each of the first concave mirror 3, the convex mirror 4, and the second concave mirror 5 is a reflective optical system for forming an image from the image light L emitted from the display 2 within a view of the user 7. The first concave mirror 3, the convex mirror 4, and the second concave mirror 5 may be hereafter collectively referred to as a reflective optical system 8.

The first concave mirror 3 is located on an optical path of the image light L emitted from the display 2. The first concave mirror 3 is configured to reflect, in a direction different from a direction toward the display 2, the image light L emitted from the display 2. More specifically, the first concave mirror 3 adjusts its spatial position relative to the display 2, such as its distance from the display 2 or its tilt angle, to reflect the image light L in the direction different from the direction toward the display 2. The first concave mirror 3 may include an adjuster for adjusting its spatial position relative to the display 2. The adjuster may include, for example, a support such as a rod located on a rear surface of the first concave mirror 3, a shaft located on the support to rotate the support and the first concave mirror 3, and a slider to translate the support and the first concave mirror 3. The adjuster may be manually adjustable or electrically adjustable with, for example, a stepping motor.

The convex mirror 4 is located on the optical path of the image light L reflected from the first concave mirror 3. The convex mirror 4 is configured to reflect, in a direction different from a direction toward the first concave mirror 3, the image light L reflected from the first concave mirror 3. More specifically, the convex mirror 4 adjusts its spatial position relative to the first concave mirror 3, such as its distance from the first concave mirror 3 or its tilt angle, to reflect the image light L in the direction different from the direction toward the first concave mirror 3. The convex mirror 4 may include an adjuster for adjusting its spatial position relative to the first concave mirror 3. The adjuster may have the same structure as or a similar structure to the adjuster in the first concave mirror 3.

The second concave mirror 5 is located on the optical path of the image light L reflected from the convex mirror 4. The second concave mirror 5 is configured to reflect, in the direction different from the direction toward the convex mirror 4, the image light L reflected from the convex mirror 4 to form the aerial image R as a real image. More specifically, the second concave mirror 5 adjusts its spatial position relative to the convex mirror 4, such as its distance from the convex mirror 4 or its tilt angle, to reflect the image light L in the direction different from the direction toward the convex mirror 4. The second concave mirror 5 may include an adjuster for adjusting its spatial position relative to the convex mirror 4. The adjuster may have the same structure as or a similar structure to the adjuster in the first concave mirror 3.

The first concave mirror 3 includes a reflective surface 3a having a curvature Sa1. The convex mirror 4 includes a reflective surface 4a having a curvature Sb. The second concave mirror 5 includes a reflective surface 5a having a curvature Sa2. As illustrated in FIG. 2, the curvature Sa1 is defined by a value of $D_{MAX}/H$, where $D_{MAX}$ is a maximum value of a length (also referred to as a maximum depth) in a direction along an optical axis OA between a point on the reflective surface 3a and a line segment LS, and the line segment LS has a length of $2 \times H$. The line segment LS includes the center of the reflective surface 3a and connects both ends of the reflective surface 3a in a cross section taken along an optical axis of the image light L incident on the first concave mirror 3. A maximum value of $D_{MAX}/H$ among the values obtained at different cross-sectional positions may be defined as the curvature Sa1. The curvature Sb and the curvature Sa2 are also defined in the same manner as or in a similar manner to the curvature Sa1. Each of the convex mirror 4 and the concave image forming mirror 5 in the aerial image display device 10 in FIG. 1A also has its curvature defined in the same manner as or in a similar manner to the curvature Sa1.

In the aerial image display device 1, the curvature Sa1 of the first concave mirror 3 is greater than the curvature Sa2 of the second concave mirror 5, and the curvature Sa2 of the second concave mirror 5 is greater than the curvature Sb of the convex mirror 4. The curvature Sa1 of the first concave mirror 3 is greater than the curvature Sa2 of the second concave mirror 5 and than the curvature Sb of the convex mirror 4. In other words, the curvature Sa1 is a maximum curvature of the optical elements included in the reflective optical system 8. This allows the first concave mirror 3 reflecting the image light L emitted from the display 2 toward the convex mirror 4 to be located closer to the display 2. This reduces a space (creates a more compact space) occupied by the display 2 and the reflective optical system 8, thus reducing the size of the aerial image display device 1. The size of the aerial image display device 1 is reduced to reduce an optical path length of the image light L between the display surface 2a of the display 2 and the reflective surface 5a of the second concave mirror 5, thus reducing the loss of the image light L due to, for example, unintended scatter or interference. The aerial image display device 1 can thus have higher display quality.

Each of the curvature Sa1 of the first concave mirror 3 and the curvature Sa2 of the second concave mirror 5 is greater than the curvature Sb of the convex mirror 4. In other words, the convex mirror 4 has the curvature Sb that is a minimum curvature of the optical elements included in the reflective optical system 8. This structure reduces the likelihood that the convex mirror 4 increases the distortion of the aerial image R, unlike the convex mirror 4 that expands the image light L at the highest ratio and thus is likely to increase the distortion of the aerial image R. This structure thus increases the display quality of the aerial image R.

For the convex mirror 4 having the relatively small curvature Sb in the aerial image display device 1, the image light L reflected from the convex mirror 4 is less likely to spread out. This can reduce an increase in the size of the second concave mirror 5 for reflecting the image light L reflected from the convex mirror 4.

In one or more embodiments of the present disclosure, as described above, the aerial image display device 1 has a reduced size and can have higher display quality of the aerial image R.

The aerial image display device 1 includes the reflective optical system 8 including the first concave mirror 3, the convex mirror 4, and the second concave mirror 5 to display the aerial image R. Each of the reflective surface 3a of the first concave mirror 3, the reflective surface 4a of the convex mirror 4, and the reflective surface 5a of the second concave mirror 5 can thus have an appropriately designed shape to reduce the distortion of the aerial image R. In the aerial image display device 1, the reflective optical system 8 includes no optical element (e.g., a beam splitter or a polarizing filter) for transmitting part of the incident image light L. The aerial image R is thus less likely to have lower luminance. When, for example, the reflective optical system 8 includes a beam splitter on its optical axis, the beam splitter separates about half of the image light L, possibly reducing the luminance of the aerial image R to half. In the aerial image display device 1, the aerial image R is less likely to have lower luminance. The aerial image display device 1 can also reduce the luminance of the image on the display surface 2a while sufficiently maintaining the luminance of the aerial image R. This can reduce power consumption of the aerial image display device 1.

The aerial image display device 1 includes a controller 6 as illustrated in, for example, FIG. 1B. The controller 6 is connected to each of the components of the aerial image display device 1 to control the components. The display 2 is included in the components controlled by the controller 6.

The controller 6 may have the function of adjusting the adjusters described above. The controller 6 may also have the functions of, for example, turning on and off the display 2, transmitting an image signal to the display 2, and adjusting the luminance, chromaticity, or frame frequency of images. For the display 2 including a heat dissipator or a cooling member, the controller 6 may have the function of adjusting the temperature of the heat dissipator or the cooling member.

The controller 6 may include one or more processors. The processors may include a general-purpose processor that reads a specific program to perform a specific function and a processor dedicated to specific processing. The dedicated processor may include an application-specific integrated circuit (ASIC). The processors may include a programmable logic device (PLD). The PLD may include a field-programmable gate array (FPGA). The controller 6 may be a system on a chip (SoC) or a system in a package (SiP) in which one or more processors cooperate with one another.

The aerial image display device 1 may include the second concave mirror 5 larger (e.g., larger in diameter) than the first concave mirror 3. This structure facilitates display of an enlarged aerial image R. More specifically, the image light L propagates, through a space, an image that is enlarged sequentially by the first concave mirror 3 and by the convex mirror 4. The image is then enlarged finally by the second concave mirror 5 to the maximum, and is easily reflected to a virtual imaging plane of the aerial image R. For the second concave mirror 5 with a relatively greater size, the reflective surface 5a can easily be shaped to correspond to each of multiple partial light beams included in the image light L. This effectively reduces the distortion of the aerial image R.

The size of the first concave mirror 3 may be defined by the length of a maximum diameter (also referred to as the length of a maximum diameter in a front view) of the reflective surface 3a of the first concave mirror 3. The size of the second concave mirror 5 may be defined by the length of a maximum diameter (also referred to as the length of a maximum diameter in a front view) of the reflective surface 5a of the second concave mirror 5. For the first concave mirror 3 having a partially spherical surface, for example, the reflective surface 3a of the first concave mirror 3 is circular in a front view. In this case, the size, or in other words, a dimension of the first concave mirror 3 may correspond to 2H (also referred to as a diameter in FIG. 2) that is the length of the line segment LS including the center of the reflective surface 3a and connecting both the ends of the reflective surface 3a. Note that the center of the reflective surface 3a is defined by a lowest point (maximum protruding point) of the curved reflective surface 3a. For the first concave mirror 3 having a partially elliptic surface, the reflective surface 3a of the first concave mirror 3 is elliptic in a front view. In this case, the size of the first concave mirror 3 may correspond to the length of a major diameter selected from the line segments including the center of the reflective surface 3a and connecting both the ends of the reflective surface 3a. For the reflective surface 3a of the first concave mirror 3 that is rectangular in a front view, the size of the first concave mirror 3 may correspond to the length of a maximum diameter (e.g., a diagonal diameter) selected from the line segments including the center of the reflective surface 3a and connecting both the ends of the reflective surface 3a.

The first concave mirror 3 may have a maximum diameter of, for example, about 150 to 200 mm. The second concave mirror 5 may have a maximum diameter of, for example, about 200 to 350 mm. The convex mirror 4 may have a maximum diameter of, for example, about 100 to 150 mm.

The size of the first concave mirror 3 may be defined by the area of the reflective surface 3a of the first concave mirror 3 or by the area of the reflective surface 3a of the first concave mirror 3 in a front view. The size of the second concave mirror 5 may be defined by the area of the reflective surface 5a of the second concave mirror 5 or by the area of the reflective surface 5a of the second concave mirror 5 in a front view.

Each of the first concave mirror 3 and the second concave mirror 5 may be a freeform concave mirror including the reflective surface 3a or the reflective surface 5a as a freeform surface. The convex mirror 4 may be a freeform convex mirror including the reflective surface 4a as a freeform surface. For the first concave mirror 3, the convex mirror 4, and the second concave mirror 5 respectively including the reflective surfaces 3a, 4a, and 5a as freeform surfaces, the reflective surfaces 3a, 4a, and 5a can easily be shaped to effectively reduce the distortion of the aerial image R. This effectively reduces the distortion of the aerial image R.

Each of the reflective surfaces 3a, 4a, and 5a as a freeform surface may be an XY polynomial surface (also referred to as an SPSXYP surface) defined by Formulas 1 and 2 below. The XY polynomial surface is expressed by polynomials until the tenth degree to be added to a conic reference surface. In Formulas 1 and 2, the sum of $m$ and $n$ is thus less than or equal to 10. In Formula 1, $z$ is an amount of sag of a surface parallel to a Z-axis (optical axis), c is a vertex curvature, r is a distance in a radial direction (more specifically, $r^2 = x^2 + y^2$), k is a conic constant, and Cj is a coefficient of a monomial $x^m y^n$.

$$z = \frac{cr^2}{1 + \sqrt{1 - (1 + k)c^2 r^2}} + \sum_{j=2}^{66} C_j x^m y^n \qquad (1)$$

$$j = \frac{(m + n)^2 + m + 3n}{2} + 1 \qquad (2)$$

The second concave mirror 5 may overlap the display 2, the first concave mirror 3, and the convex mirror 4 when viewed from a rear surface of the second concave mirror 5 (in a direction of an arrow denoted with a reference sign Ya in FIG. 1B) in a direction parallel to the virtual imaging plane of the aerial image R (a Y-direction in FIG. 1B). This structure reduces the space occupied by the display 2 and the reflective optical system 8, thus reducing the size of the aerial image display device 1. This reduces the optical path length of the image light L inside the aerial image display device 1, and thus reduces the loss of the image light L due to, for example, unintended scatter or interference. The aerial image display device 1 can thus have still higher display quality. The reflective surface 5a of the second concave mirror 5 may overlap the display surface 2a of the display 2, the reflective surface 3a of the first concave mirror 3, and the reflective surface 4a of the convex mirror 4. More specifically, the positional relationship between the components of the reflective optical system 8 directly associated with the optical path may be defined.

A viewer views the aerial image R in a direction substantially orthogonal to the virtual imaging plane of the aerial image R. The direction parallel to the virtual imaging plane of the aerial image R thus corresponds to a height direction of the aerial image display device 1. The direction orthogonal to the virtual imaging plane of the aerial image R corresponds to a thickness direction (depth direction) of the aerial image display device 1. This structure can at least reduce the thickness (depth) of the aerial image display device 1.

The second concave mirror 5 may include the display 2, the first concave mirror 3, and the convex mirror 4 when viewed from the rear surface of the second concave mirror 5 (in the direction of the arrow denoted with the reference sign Ya in FIG. 1B) in the direction parallel to the virtual imaging plane of the aerial image R (the Y-direction in FIG. 1B). This structure reduces the space occupied by the display 2 and the reflective optical system 8, thus further reducing the size of the aerial image display device 1. This further reduces the optical path length of the image light L inside the aerial image display device 1, and thus effectively reduces the loss of the image light L due to, for example, unintended scatter or interference. The aerial image display device 1 can thus effectively have higher display quality. The reflective surface 5a of the second concave mirror 5 may include the display surface 2a of the display 2, the reflective surface 3a of the first concave mirror 3, and the reflective surface 4a of the convex mirror 4. More specifically, the positional relationship between the components of the reflective optical system 8 directly associated with the optical path may be defined. This structure can at least reduce the thickness (depth) of the aerial image display device 1.

FIGs. 3 and 4 are each a diagram of a result of simulation illustrating the aerial image R viewed by the user 7 of the aerial image display device 1. In each of FIGs. 3 and 4, to visually understand the distortion of the aerial image R more easily, the aerial image R has a lattice pattern as indicated by coordinate axes of a distortion direction and a distortion amount. In each of FIGs. 3 and 4, solid lines indicate the aerial image R viewed by the user 7, and broken lines indicate an ideal aerial image IR with no distortion. Note that the distortion of the aerial image R may include distortions in a planar direction (a direction parallel to the page of each figure) and in the depth direction (a direction perpendicular to the page of each figure), but FIGs. 3 and 4 each illustrate the distortion in the planar direction alone.

As illustrated in FIG. 3, the distortion of the aerial image R is likely to occur at an outer periphery of the aerial image R, and the distortion is likely to be greater specifically at four corners (a lower right corner LR, an upper right corner UR, a lower left corner LL, and an upper left corner UL) of the aerial image R. Table 1 shows the distortions of the aerial image R at the corners LR, UR, LL, and UL with respect to the ideal aerial image IR. As shown in Table 1, the aerial image display device 1 reduces the distortion of the aerial image R at each of the corners LR, UR, LL, and UL to less than or equal to 5%. Note that "the distortion is less than or equal to 5%" refers to "the absolute value of the distortion is less than or equal to 5%". The same or similar applies hereafter.

Table 1

|  | X-component | Y-component |
|---|---|---|
| LR | -5.0% | 1.1% |
| UR | -0.6% | -2.2% |

(continued)

|  | X-component | Y-component |
|---|---|---|
| LL | -5.0% | 1.1% |
| UL | -0.6% | -2.2% |

Note that a positive X-direction corresponds to rightward in FIG. 3. A negative X-direction corresponds to leftward in FIG. 3. A positive Y-direction corresponds to upward in FIG. 3. A negative Y-direction corresponds to downward in FIG. 3. In each of the X-direction and the Y-direction in Table 1, when the aerial image R is distorted outward from the ideal aerial image IR, the distortion is indicated with a positive value. When the aerial image R is distorted inward from the ideal aerial image IR, the distortion is indicated with a negative value. For example, with respect to the lower right corner LR, the positive X-direction is outward (rightward or an expanding direction) in the X-direction, the negative X-direction is inward (leftward or a contracting direction) in the X-direction, the positive Y-direction is outward (downward or an expanding direction) in the Y-direction, and the negative Y-direction is inward (upward or a contracting direction) in the Y-direction. The same or similar applies to the upper right corner UR, the lower left corner LL, and the upper left corner UL. The same or similar applies to the tables below each showing the distortions of the aerial image R.

The distortions at the corners LR, UR, LL, and UL are calculated as described below. The distortion in the X-direction at each of the corners LR, UR, LL, and UL is defined by a deviation length in the X-direction from a length LX of an upper side (a lower side has the same length as the upper side) of the ideal aerial image IR that is rectangular. The ideal aerial image IR has the lower side with the same length as the length LX of the upper side, and thus the length LX of the upper side is used as a reference length in the X-direction. For example, the distortion in the X-direction at the corner UR is defined by a deviation length $\Delta$XUR in the X-direction from the length LX of the upper side with respect to an upper right corner CUR of the ideal aerial image IR. More specifically, the distortion in the X-direction at the corner UR is defined by $(\Delta XUR/LX) \times 100$ (%). The aerial image R is distorted inward from the ideal aerial image IR at the corner UR in the X-direction. The distortion at the corner UR is thus indicated with a negative value. The distortions in the X-direction at the corners LR, LL, and UL are defined in the same manner as or in a similar manner to the above. For the ideal aerial image IR that is other than rectangular, the reference length in the X-direction may be an average length or a maximum length in the X-direction.

The distortion in the Y-direction at each of the corners LR, UR, LL, and UL is defined by a deviation length in the Y-direction from a length LY of a right side (a left side has the same length as the right side) of the ideal aerial image IR that is rectangular. The ideal aerial image IR has the left side with the same length as the length LY of the right side, and thus the length LY of the right side is used as a reference length in the Y-direction. For example, the distortion in the Y-direction at the corner UR is defined by a deviation length $\Delta$YUR in the Y-direction from the length LY of the right side with respect to the upper right corner CUR of the ideal aerial image IR. More specifically, the distortion in the Y-direction at the corner UR is defined by $(\Delta YUR/LY) \times 100$ (%). The aerial image R is distorted inward from the ideal aerial image IR at the corner UR in the Y-direction. The distortion at the corner UR is thus indicated with a negative value. The distortions in the Y-direction at the corners LR, LL, and UL are defined in the same manner as or in a similar manner to the above. For the ideal aerial image IR that is other than rectangular, the reference length in the Y-direction may be an average length or a maximum length in the Y-direction.

FIG. 4 illustrates the aerial image R viewed by the user 7 when the display 2 is moved from its optimized position. In FIG. 4, the display 2 is moved rearward by 1.5 mm in a direction in which the image light L travels before being incident on the first concave mirror 3. Note that "rearward" refers to a direction away from the first concave mirror 3 in the direction in which the image light L travels before being incident on the first concave mirror 3.

As illustrated in FIG. 4, the distortion of the aerial image R is likely to occur at the outer periphery of the aerial image R, and the distortion is likely to be greater specifically at the four corners LR, UR, LL, and UL of the aerial image R. Table 2 shows the distortions of the aerial image R at the corners LR, UR, LL, and UL with respect to the ideal aerial image IR. As shown in Table 2, although the display 2 is moved rearward, the aerial image display device 1 can reduce the distortion of the aerial image R at each of the corners LR, UR, LL, and UL to less than or equal to 5%.

Table 2

|  | X-component | Y-component |
|---|---|---|
| LR | -5.0% | -1.8% |
| UR | -2.4% | -1.3% |
| LL | -5.0% | -1.8% |

(continued)

|  | X-component | Y-component |
|---|---|---|
| UL | 2.4% | -1.3% |

Table 3 shows the distortions of the aerial image R at the corners LR, UR, LL, and UL with respect to the ideal aerial image IR when the display 2 is moved forward by 1.5 mm in the direction in which the image light L travels before being incident on the first concave mirror 3. Note that "forward" refers to a direction toward the first concave mirror 3 in the direction in which the image light L travels before being incident on the first concave mirror 3. As shown in Table 3, although the display 2 is moved forward, the aerial image display device 1 can reduce the distortion of the aerial image R at each of the corners LR, UR, LL, and UL to less than or equal to 5%.

Table 3

|  | X-component | Y-component |
|---|---|---|
| LR | -3.3% | 2.3% |
| UR | -1.5% | -5.0% |
| LL | -3.3% | 2.3% |
| UL | -1.5% | -5.0% |

As shown in Tables 3 and 4, although the display 2 is moved by about 1.5 mm from its optimized position in the direction in which the image light L travels before being incident on the first concave mirror 3, the aerial image display device 1 can reduce the distortion of the aerial image R. The aerial image display device 1 thus saves workload for alignment of the display 2 with the reflective optical system 8 in manufacturing of the aerial image display device 1.

FIG. 5 is a graph showing the relationship between a modulation transfer function (MTF) value and a spatial frequency (cycles/mm) in the aerial image display device 1 that includes the reflective optical system 8 including the first concave mirror 3, the convex mirror 4, and the second concave mirror 5. FIG. 5 is a graph obtained through simulation. The simulation was performed with the curvature Sa1 of the first concave mirror 3 being 0.39, the curvature Sb of the convex mirror 4 being 0.20, and the curvature Sa2 of the second concave mirror 5 being 0.27. The MTF value in the aerial image display device 1 is calculated based on the image displayed on the display surface 2a and the aerial image R formed from the image light L emitted from the display surface 2a. To calculate the MTF value, a commercially available surface luminance meter (e.g., "Imaging colorimetry luminance meter ProMetric I series: IC-PMI8Model: IC-PMI8-ND3" manufactured by Radiant Vision Systems) may be used. For comparison, a broken line in FIG. 5 indicates the relationship between the MTF value and the spatial frequency in an aerial image display device (hereafter referred to as an aerial image display device C) that includes a reflective optical system simply including one concave mirror and does not include the features of the present disclosure. The concave mirror in the aerial image display device C has a curvature of about 0.36. In FIG. 5, the MTF value is normalized to a maximum value of 1. Typically, an MTF value greater than or equal to 0.2 allows display of an aerial image having a higher contrast ratio.

The MTF value can be specifically calculated as described below. The MTF value is an index for evaluating the performance of the optical system, and is expressed using a numerical value from 0 to 1. The MTF value being closer to 1 allows higher performance (resolution). A ladder pattern similar to a barcode is imaged and evaluated. For 6.3 line pairs of black and white lines (each of the line pairs including a black line and a white line), the ladder pattern image includes 6.3 line pairs per millimeter, or specifically, 6.3 cycles/mm. In this case, each of the black and white lines has the same line width of 79 $\mu$m (1/6.3/2 = 0.079 mm), and has a pitch of 158 $\mu$m (1/6.3 = 0.158 mm). This ladder pattern image is read by the surface luminance meter to evaluate the accuracy (resolution) achievable with the reproduced ladder pattern image. As the accuracy deteriorates, white lines between adjacent black lines fade gradually, and the adjacent black lines appear to be continuous with each other. For example, for the ladder pattern image having a greater distortion, the MTF value decreases closer to 0. For the ladder pattern image having a less distortion, the MTF value increases closer to 1. The

MTF value is calculated by the formula (the density of the black line - the density of the white line)/(the density of the black line). The density may be expressed with a luminance level or a tone. For the MTF value being closer to 1, the resolution is higher. Note that a chart including the spatial frequency (cycles/mm) of the line pairs of black and white lines used for determining the resolution of a digital camera is defined in an ISO 12233 resolution chart. The MTF value may be calculated based on the ISO12233 resolution chart, and the distortion may be derived from the MTF value. To derive the distortion from the MTF value, the MTF values may be stored to correspond to the respective distortions in, for example, a data table.

The curvature Sa1 may be, for example, about 0.35 to 0.45 to reduce the distortion to less than or equal to 5% with the MTF value greater than or equal to 0.2 at a spatial frequency of 3 to 10 cycles/mm. The curvature Sb may be, for example, about 0.15 to 0.25 to produce a similar result. The curvature Sa2 may be, for example, about 0.25 to 0.35 to produce a similar result. Note that each of the curvatures Sa1, Sb, and Sa2 is not limited to the above range, and may vary depending on factors such as the size, the shape, and the angle of field (spread of the light) of the display surface 2a of the display2.

As shown in FIG. 5, the aerial image display device C in a comparative example has the MTF value greater than or equal to 0.2 at a spatial frequency of 1 to 9 cycles/mm. In contrast, the aerial image display device 1 has the MTF value greater than or equal to 0.2 at a spatial frequency of 1 to 13 cycles/mm in the present embodiment. As described above, the reflective optical system 8 including the first concave mirror 3, the convex mirror 4, and the second concave mirror 5 can display the aerial image R with a higher contrast ratio in a wider range of spatial frequencies.

Note that, in one or more embodiments of the present disclosure, the aerial image display device 1 may have the contrast ratio with an MTF value greater than or equal to 0.3 at a spatial frequency of 1 to 11 cycles/mm, or may have the contrast ratio with an MTF value greater than or equal to 0.4 at the spatial frequency of 1 to 9 cycles/mm. In one or more embodiments of the present disclosure, the aerial image display device 1 may further have the contrast ratio with an MTF value greater than or equal to 0.5 at a spatial frequency of 1 to 7 cycles/mm.

FIG. 6 shows the relationship between the spatial frequency and a difference ΔMTF in the MTF values between the aerial image display device 1 and the aerial image display device C. The difference ΔMTF is obtained by subtracting the MTF value in the aerial image display device C from the MTF value in the aerial image display device 1. As shown in FIG. 6, the aerial image display device 1 has a greater MTF value than the aerial image display device C at a spatial frequency of 1 to 15 cycles/mm. The reflective optical system 8 including the first concave mirror 3, the convex mirror 4, and the second concave mirror 5 can increase the contrast ratio of the aerial image R in a wider range of spatial frequencies. In one or more embodiments of the present disclosure, as shown in FIG. 6, the difference ΔMTF is greater than or equal to 0.2 at a spatial frequency of 5 to 10 cycles/mm. The aerial image display device 1 may thus have the contrast ratio with the MTF value greater than or equal to 0.2 at the spatial frequency of 5 to 10 cycles/mm.

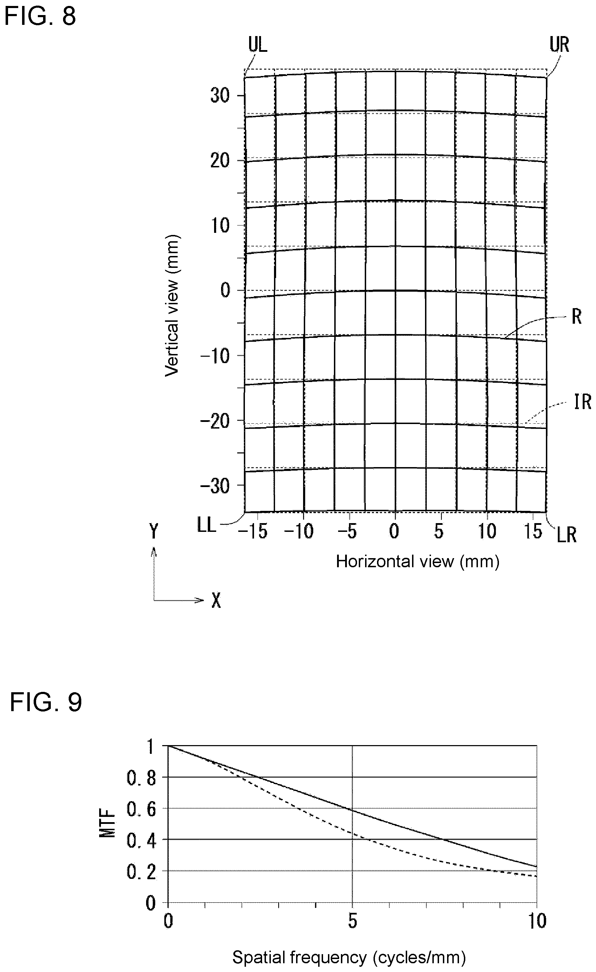

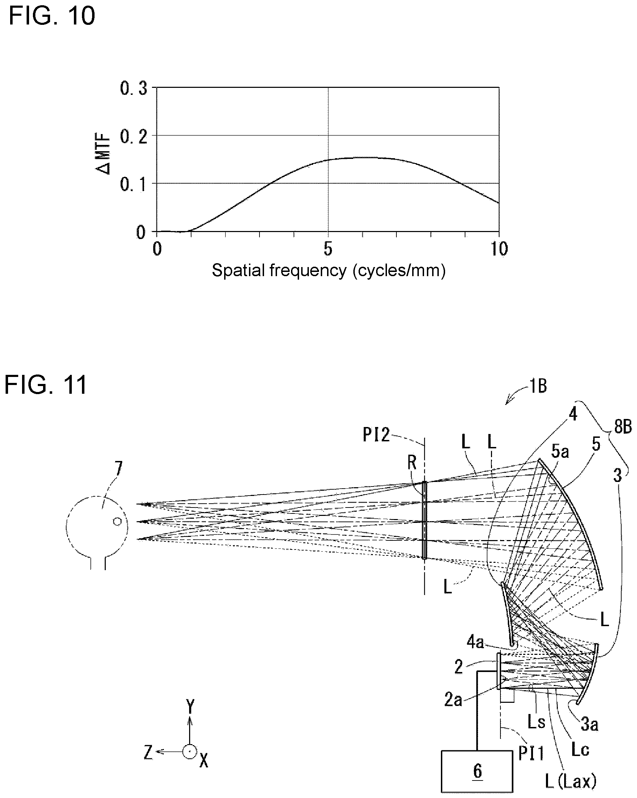

An aerial image display device according to another embodiment of the present disclosure will now be described. FIG. 7 is a diagram of an aerial image display device according to the other embodiment of the present disclosure illustrating its structure. FIG. 8 is a diagram of an example aerial image viewed by the user of the aerial image display device in FIG. 7. FIGs. 9 and 10 are each a graph of a modulation transfer function for the aerial image display device in FIG. 7. In the present embodiment, an aerial image display device 1A has the same components as or similar components to those of the aerial image display device 1 according to the above embodiment except for the structures of the reflective optical system. Like reference numerals denote the same components as or similar components to those of the aerial image display device 1. Such components will not be described.

In the present embodiment, as illustrated in FIG. 7, the aerial image display device 1Aincludes the display 2 and a reflective optical system 8A. The reflective optical system 8Ais located on the optical path of the image light L emitted from the display 2. The reflective optical system 8A reflects, in a direction different from the direction toward the display 2, the image light L emitted from the display 2 to form the aerial image R as a real image.

The aerial image R formed by the aerial image display device 1A has a distortion less than or equal to 5%. The aerial image R has a contrast value expressed with the MTF, which is normalized to a maximum value of 1, greater than or equal to 0.2 at the spatial frequency of 3 to 10 cycles/mm. In the present embodiment, as will be described later, the aerial image display device 1A includes the first concave mirror 3 and the second concave mirror 5, and the curvature Sa1 of the first concave mirror 3 is greater than the curvature Sa2 of the second concave mirror 5. With this structure, the aerial image R may have the contrast value, expressed with the MTF, greater than or equal to 0.2 at the spatial frequency of 3 to 10 cycles/mm. This allows the aerial image display device 1A to display the aerial image R having a less distortion and a higher contrast ratio.

The reflective optical system 8A may include the first concave mirror 3 and the second concave mirror 5. The first concave mirror 3 is located on the optical path of the image light L emitted from the display 2. The first concave mirror 3 reflects, in the direction different from the direction toward the display 2, the image light L emitted from the display 2. The second concave mirror 5 is located on the optical path of the image light L reflected from the first concave mirror 3. The second concave mirror 5 reflects, in the direction different from the direction toward the first concave mirror 3, the image light L reflected from the first concave mirror 3.

The first concave mirror 3 includes the reflective surface 3a having the curvature Sa1. The second concave mirror 5 includes the reflective surface 5a having the curvature Sa2. The curvature Sa1 of the first concave mirror 3 may be greater than the curvature Sa2 of the second concave mirror 5. This allows the first concave mirror 3 reflecting the image light L emitted from the display 2 toward the second concave mirror 5 to be located closer to the display 2. This reduces the space occupied by the display 2 and the reflective optical system 8A, thus reducing the size of the aerial image display device 1A. With the aerial image display device 1A being smaller, the optical path length of the image light L is reduced between the display surface 2a of the display 2 and the reflective surface 5a of the second concave mirror 5. This can reduce the loss of the image light L due to, for example, unintended scatter or interference. The aerial image display device 1A can thus have higher display quality.

Each of the first concave mirror 3 and the second concave mirror 5 may be a freeform concave mirror including the reflective surface 3a or the reflective surface 5a as a freeform surface. For the first concave mirror 3 and the second concave mirror 5 respectively including the reflective surfaces 3a and 5a as freeform surfaces, the reflective surfaces 3a and 5a can easily be shaped to effectively reduce the distortion of the aerial image R. This effectively reduces the distortion of the aerial image R.

The second concave mirror 5 may overlap the display 2 and the first concave mirror 3 when viewed from the rear surface of the second concave mirror 5 (in a direction of an arrow denoted with a reference sign Yb in FIG. 7) in a direction parallel to the virtual imaging plane of the aerial image R (the Y-direction in FIG. 7). This reduces the space occupied by the display 2 and the reflective optical system 8A, thus reducing the size of the aerial image display device 1A. This reduces the optical path length of the image light L inside the aerial image display device 1A, and thus reduces the loss of the image light L due to, for example, unintended scatter or interference. The aerial image display device 1A can thus have still higher display quality. The reflective surface 5a of the second concave mirror 5 may overlap the display surface 2a of the display 2 and the reflective surface 3a of the first concave mirror 3. More specifically, the positional relationship between components of the reflective optical system 8A directly associated with the optical path may be defined.

The second concave mirror 5 may include the display 2 and the first concave mirror 3 when viewed from the rear surface of the second concave mirror 5 (in the direction of the arrow denoted with the reference sign Yb in FIG. 7) in the direction parallel to the virtual imaging plane of the aerial image R (the Y-direction in FIG. 7). This further reduces the space occupied by the display 2 and the reflective optical system 8A, thus further reducing the size of the aerial image display device 1A. This further reduces the optical path length of the image light L inside the aerial image display device 1A, and thus effectively reduces the loss of the image light L due to, for example, unintended scatter or interference. The aerial image display device 1A can thus effectively have higher display quality. The reflective surface 5a of the second concave mirror 5 may include the display surface 2a of the display 2 and the reflective surface 3a of the first concave mirror 3. More specifically, the positional relationship between components of the reflective optical system 8A directly associated with the optical path may be defined.

The reflective optical system 8A may further include a reflector in addition to the first concave mirror 3 and the second concave mirror 5, thus further reducing the distortion of the aerial image R. For the reflective optical system 8A including the first concave mirror 3, the second concave mirror 5, and the reflector, the positions of the first concave mirror 3 and the second concave mirror 5 may differ from the positions in FIG. 7. The reflector may be located on the optical path of the image light L between the first concave mirror 3 and the second concave mirror 5. The reflector may be a convex mirror configured to reflect the image light L reflected from the first concave mirror 3 toward the second concave mirror 5.

FIG. 8 is a diagram of a result of the simulation illustrating the aerial image R viewed by the user 7 of the aerial image display device 1A. In FIG. 8, to visually understand the distortion of the aerial image R more easily in the same manner as or in a similar manner to FIGs. 3 and 4, the aerial image R has a lattice pattern as indicated by the coordinate axes of the distortion direction and the distortion amount. In FIG. 8, solid lines indicate the aerial image R viewed by the user 7, and broken lines indicate the ideal aerial image IR with no distortion. Note that the distortion of the aerial image R may include distortions in a planar direction (a direction parallel to the page of each figure) and in the depth direction (a direction perpendicular to the page of each figure), but FIG. 8 illustrates the distortion in the planar direction alone.

As illustrated in FIG. 8, the distortion of the aerial image is likely to occur at the outer periphery of the aerial image R, and the distortion is likely to be greater specifically at the four corners LR, UR, LL, and UL of the aerial image R. Table 4 shows the distortions of the aerial image R at the corners LR, UR, LL, and UL with respect to the ideal aerial image IR. As shown in Table 4, the aerial image display device 1A reduces the distortion at each of the corners LR, UR, LL, and UL to less than or equal to 5%.

Table 4

|  | X-component | Y-component |
|---|---|---|
| LR | 0.9% | 0.6% |
| UR | 0.3% | 2.7% |
| LL | 0.9% | 0.6% |
| UL | 0.3% | 2.7% |

FIG. 9 is a graph showing the relationship between the MTF value and the spatial frequency in the aerial image display device 1A that includes the reflective optical system 8A including the first concave mirror 3 and the second concave mirror 5. FIG. 9 is a graph obtained through simulation in the same manner as or in a similar manner to the graph in FIG. 5. The simulation was performed with the curvature Sa1 of the first concave mirror 3 being 0.25 and the curvature Sa2 of the second concave mirror 5 being 0.12. For comparison, a broken line in FIG. 9 indicates the relationship between the MTF value and the spatial frequency in the aerial image display device C. In FIG. 9, the MTF value is normalized to a maximum value of 1.

As shown in FIG. 9, the aerial image display device C has the MTF value greater than or equal to 0.2 at the spatial frequency of 1 to 9 cycles/mm. In contrast, the aerial image display device 1A has the MTF value greater than or equal to 0.2 at a spatial frequency of 1 to 10 cycles/mm. As described above, the reflective optical system 8A including the first concave mirror 3 and the second concave mirror 5 can display the aerial image R with a higher contrast ratio in a wider range of spatial frequencies.

FIG. 10 shows the relationship between the spatial frequency and a difference ΔMTF in the MTF value between the aerial image display device 1A and the aerial image display device C. The difference ΔMTF is obtained by subtracting the MTF value in the aerial image display device C from the MTF value in the aerial image display device 1A. As shown in FIG. 10, the aerial image display device 1A has a greater MTF value than the aerial image display device C at the spatial frequency of 1 to 10 cycles/mm. The reflective optical system 8 including the first concave mirror 3 and the second concave mirror 5 can increase the contrast ratio of the aerial image R in a wider range of spatial frequencies.

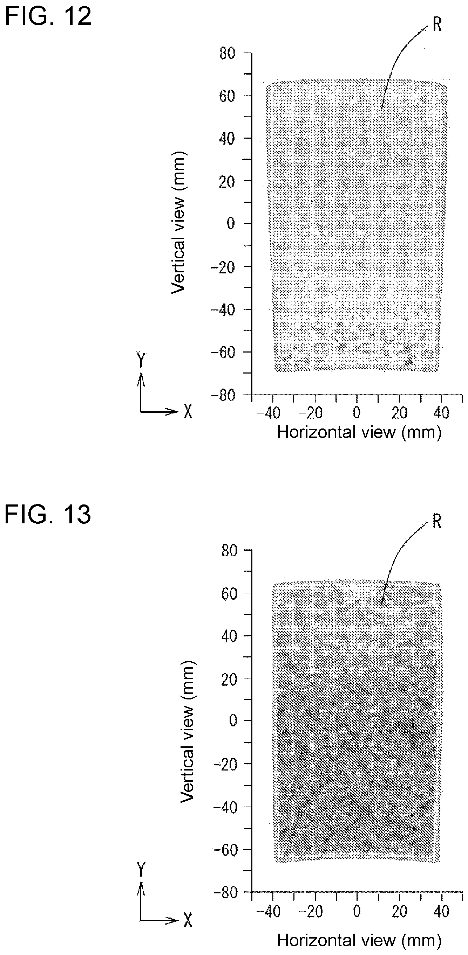

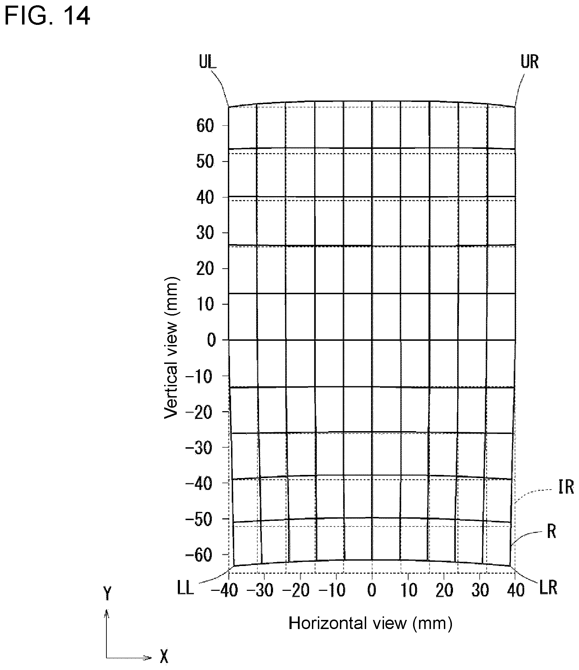

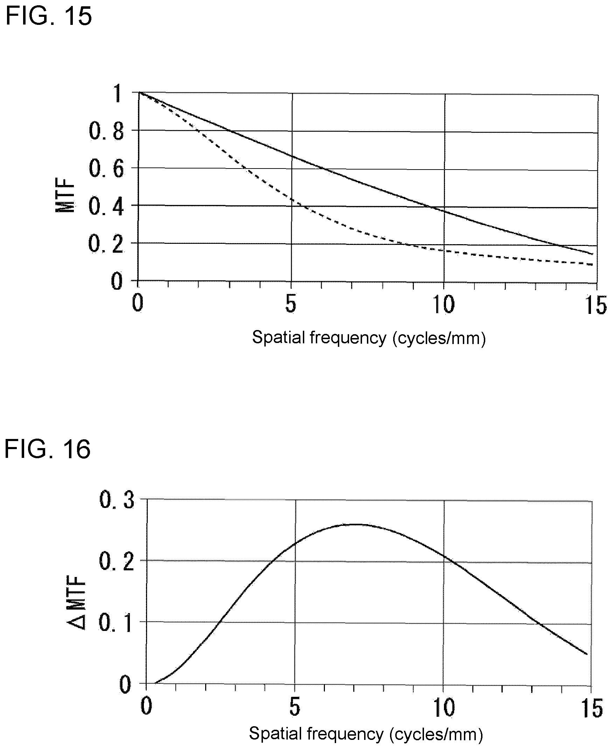

FIG. 11 is a side view of an aerial image display device 1B according to another embodiment of the present disclosure illustrating its main components. FIGs. 12 and 13 are each a diagram of an example aerial image R viewed by the user 7 of the aerial image display device 1B in FIG. 11. FIG. 14 is a diagram of a result of the simulation illustrating the aerial image R viewed by the user 7 of the aerial image display device 1B in FIG. 11. FIGs. 15 and 16 are each a graph of a modulation transfer function for the aerial image display device 1B in FIG. 11.

In the present embodiment, the aerial image display device 1B differs from the aerial image display device 1 according to the above embodiment in the structure of the reflective optical system. More specifically, the display surface 2a of the display 2 is substantially parallel to an imaging plane of the aerial image R. In other words, a first virtual plane PI1 including the display surface 2a of the display 2 is substantially parallel to a second virtual plane PI2 including the imaging plane of the aerial image R. In still other words, the aerial image display device 1B includes a reflective optical system 8B that is a telecentric optical system.

In the telecentric optical system, a main light beam is parallel to an optical axis. In the telecentric optical system, for example, the image light L emitted from the display surface 2a of the display 2 includes a main light beam Lc parallel to an optical axis Lax. As illustrated in FIG. 11, the main light beam Lc of the image light L is aligned with a central axis of a luminous flux Ls radiating from a light emitting point on the display surface 2a and reflected from the first concave mirror 3, the convex mirror 4, and the second concave mirror 5 to the imaging plane of the aerial image R. The luminous flux Ls radiates from the light emitting point within a range of predetermined solid angles (based on the angle of field). The optical axis Lax is orthogonal to the display surface 2a. The main light beam Lc is aligned with the optical axis Lax when viewed from one light emitting point. With the main light beam Lc parallel to the optical axis Lax, the first virtual plane PI1 is substantially parallel to the second virtual plane PI2.

The above structure produces the advantageous effects described below. With the main light beam Lc parallel to the optical axis Lax, the main light beam Lc is a maximum intensity light beam of the luminous flux Ls. Thus, substantially all the maximum intensity light beams of the luminous flux Ls radiating from all the light emitting points on the display surface 2a reach the imaging plane of the aerial image R. This increases the luminance of the entire aerial image R. This also improves the luminance uniformity of the aerial image R. The luminance uniformity is expressed by {(a minimum luminance of the aerial image R)/(a maximum luminance of the aerial image R)} × 100 (%).

The radiant intensity distribution of the luminous flux Ls radiating from one of the light emitting points on the display surface 2a has an approximate cosine surface with a longitudinally oblong shape in accordance with Lambert's cosine law. Lambert's cosine law is the law by which the radiant intensity of light observed from an ideal diffuse radiator is directly proportional to the cosine of an angle θ between the direction of incident light and a normal to the radiating surface (the display surface 2a in the aerial image display device 1B according to the present embodiment). The cosine surface herein refers to a radiant intensity distribution pattern of light in the shape of a cosine curve as viewed in a longitudinal section. With the main light beam Lc at the central axis of the luminous flux Ls being the maximum intensity light beam, the intensity of the main light beam Lc may be greater than or equal to 50% of an entire light amount of the main light beam Ls. Thus, the aerial image display device 1B may form the aerial image R from greater than or equal to 50%, greater than or equal to 70%, or greater than or equal to 90% of the entire light amount of the image light L radiating from the display surface 2a.

The first virtual plane PI1 may not be perfectly parallel to the second virtual plane PI2, and may cross the second virtual plane PI2 at an angle of -5 to +5°, at an angle of -3 to +3°, or at an angle of -1 to +1°. More specifically, the main light beam Lc may cross the optical axis Lax at the angle of -5 to +5°, at the angle of -3 to +3°, or at the angle of -1 to +1°.

The simulation was performed for the luminance uniformity of the aerial image R in a first example structure of the aerial image display device 1B and in a second example structure of the aerial image display device 1B. In the first example structure, an angle formed between the first virtual plane PI1 and the second virtual plane PI2 is 5.0°. In the second example structure, an angle between the first virtual plane PI1 and the second virtual plane PI2 is 0.7°. The simulation for the luminance uniformity was performed using optical simulation program software ("LightTools" manufactured by Sinops Ltd). FIG. 12 is a diagram of a result for the first example structure. FIG. 13 is a diagram of a result for the second example structure. In FIGs. 12 and 13, a brighter area indicates that the luminance is lower, and a darker area indicates that the luminance is higher. In the first example structure, as illustrated in FIG. 12, the overall luminance is lower with the luminance uniformity of 64.2%. In the second example structure, as illustrated in FIG. 13, the overall luminance is higher with the luminance uniformity of 80.4%. With the first virtual plane PI1 more parallel to the second virtual plane PI2, the luminance uniformity can be improved.

FIG. 14 is a diagram of a result of the simulation illustrating the aerial image R viewed by the user 7 of the aerial image display device 1B. FIG. 14 illustrates the display as in FIGs. 3, 4, and 8. As illustrated in FIG. 14, the distortion of the aerial image R is likely to occur at the outer periphery, and the distortion is likely to be greater specifically at the four corners LR, UR, LL, and UL of the aerial image R. Table 5 shows the distortions of the aerial image R at the corners LR, UR, LL, and UL with respect to the ideal aerial image IR. As shown in Table 5, the aerial image display device 1B reduces the distortion of the aerial image R at each of the corners LR, UR, LL, and UL to less than or equal to 5%.

Table 5

|  | X-component | Y-component |
|---|---|---|
| LR | -3.4% | -4.3% |
| UR | 0.6% | -1.0% |
| LL | -3.4% | -4.3% |
| UL | 0.6% | -1.0% |

FIG. 15 is a graph showing the relationship between the MTF value and the spatial frequency in the aerial image display device 1B. FIG. 15 is a graph obtained through simulation. The simulation was performed with the curvature Sa1 of the first concave mirror 3, the curvature Sa2 of the second concave mirror 5, and the curvature Sb of the convex mirror 4 being the same as or similar to those in the aerial image display device 1 in FIG. 1B, and with the angle formed between the first virtual plane PI1 and the second virtual plane PI2 being 0.7°. For comparison, a broken line in FIG. 15 indicates the relationship between the MTF value and the spatial frequency in the aerial image display device C. In FIG. 15, the MTF value is normalized to a maximum value of 1.

As shown in FIG. 15, the aerial image display device C has the MTF value greater than or equal to 0.2 at a spatial frequency of 1 to 9 cycles/mm. In contrast, the aerial image display device 1B has the MTF value greater than or equal to 0.2 at a spatial frequency of 1 to 14 cycles/mm. As described above, the aerial image display device 1B can display the aerial image R with a higher contrast ratio in a wider range of spatial frequencies.

FIG. 16 shows the relationship between the spatial frequency and a difference ΔMTF in the MTF value between the aerial image display device 1B and the aerial image display device C. The difference ΔMTF is obtained by subtracting the MTF value in the aerial image display device C from the MTF value in the aerial image display device 1B. As shown in FIG. 16, the aerial image display device 1B has a greater MTF value than the aerial image display device C at a spatial frequency of 1 to 14 cycles/mm. The aerial image display device 1B can display the aerial image R with a higher contrast ratio in a wider range of spatial frequencies.

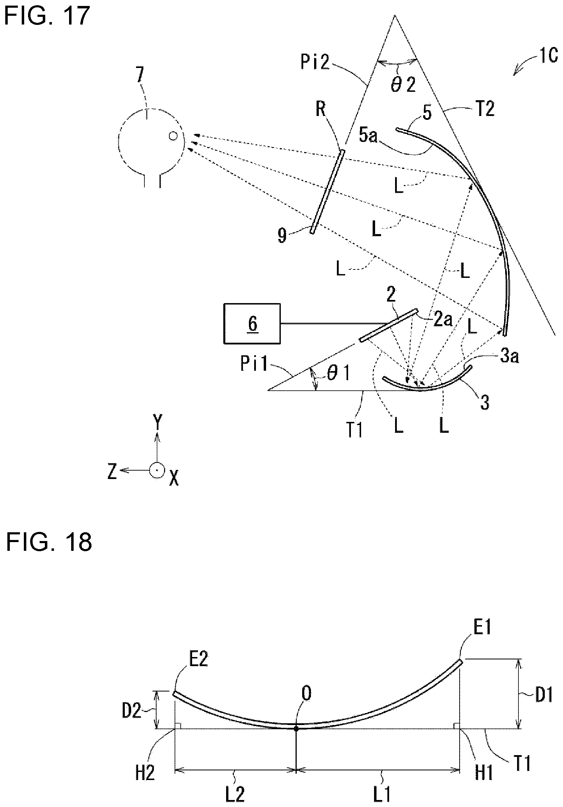

FIG. 17 is a side view of an aerial image display device 1C according to another embodiment of the present disclosure illustrating its main components. As illustrated in FIG. 17, the aerial image display device 1C includes the display 2, the first concave mirror 3, and the second concave mirror 5. The first concave mirror 3 has a tilt angle θ1 with respect to a first virtual plane Pi1 including the display surface 2a, and the second concave mirror 5 has a tilt angle θ2 with respect to a second virtual plane Pi2 including a virtual imaging plane 9 of the aerial image. The tilt angle θ1 is smaller than the tilt angle θ2.

The first concave mirror 3 may be smaller than the second concave mirror 5, and may have a closer size to the display surface 2a of the display 2. In this structure, the first concave mirror 3 receives substantially the entire image light L emitted from the display surface 2a, and directs the image light L toward the second concave mirror 5 as a relatively enlarged image. The size of the first concave mirror 3 may be defined by the length of a maximum diameter (also referred to as the length of a maximum diameter in a front view) of the reflective surface 3a of the first concave mirror 3. The size of the second concave mirror 5 may be defined by the length of a maximum diameter (also referred to as the length of a maximum diameter in a front view) of the reflective surface 5a of the second concave mirror 5. The first concave mirror 3 may have a greater curvature than the second concave mirror 5. This structure allows the first concave mirror 3 to be located closer to the display 2, reduces excess diffusion of the image light L reflected from the first concave mirror 3, and directs the reflected image light L toward the second concave mirror 5 as an enlarged image to be fully received by the second concave mirror 5. This reduces the loss of the image light L due to the diffusion of the image light L, allowing efficient use of the image light L.

Thus, the aerial image display device 1C can have a smaller size, and can have higher display quality of the aerial image R with the image light L being less likely to have lower luminance.

The tilt angle θ1 of the first concave mirror 3 with respect to the first virtual plane Pi1 including the display surface 2a is smaller than the tilt angle θ2 of the second concave mirror 5 with respect to the second virtual plane Pi2 including the virtual imaging plane 9 of the aerial image. This reduces the likelihood that the tilt of the first concave mirror 3 increases the distortion of the aerial image R. When the tilt angle θ1 of the first concave mirror 3 is greater, a difference in the optical path length from the display surface 2a to the virtual imaging plane 9 is likely to be greater among portions of the aerial image R. In particular, a difference in the optical path length is likely to be greater between the center and a peripheral edge of the aerial image R (each of the four corners for the aerial image R that is rectangular). This may increase the distortion of the aerial image R at the peripheral edge. In the present embodiment, the aerial image display device 1 can reduce the difference in the optical path length among the portions of the aerial image R, thus reducing the distortion of the aerial image R in a specific portion (e.g., at a peripheral edge).

Each of the first concave mirror 3 and the second concave mirror 5 is a reflective optical system that forms an image from the image light L emitted from the display 2 within the view of the user 7.

The first concave mirror 3 includes the reflective surface 3a. As illustrated in FIG. 18, the reflective surface 3a may have a first curvature S1 and a second curvature S2. In this structure, the first curvature S1 and the second curvature S2 are defined as described below. As illustrated in FIG. 18, a plane tangent to the reflective surface 3a of the first concave mirror 3 at a vertex (also referred to as an original point of the freeform surface) O of the reflective surface 3a is hereafter referred to as a tangent plane T1. Additionally, both end points of the reflective surface 3a are referred to as a point E1 and a point E2, and points in vertical lines extending downward perpendicularly from the point E1 and from the point E2 to the tangent plane T1 to be in contact with the tangent plane T1 are referred to as a point H1 and a point H2, as viewed in a cross section of the first concave mirror 3 taken along a plane through the vertex O and parallel to the direction in which the image light L travels. A distance between the vertex O and the point H1 is referred to as a distance L1, a distance between the vertex O and the point H1 is referred to as a distance L2, a distance between the point E1 and the point H1 is referred to as a distance D1, and a distance between the point E2 and the point H2 is referred to as a distance D2. The distance L1 is greater than or equal to the distance L2. In the above structure, the first curvature S1 is defined by D1/L1, and the second curvature S2 is defined by D2/L2. Note that a maximum value of D1/L1 among the values obtained at different cross-sectional positions may be defined as the first curvature S1. Similarly, a maximum value of D2/L2 among the values obtained at different cross-sectional positions may be defined as the second curvature S2.

The curvature of the first concave mirror 3 may be defined by the first curvature S1 and the second curvature S2. The curvature of the first concave mirror 3 may also be defined by an average of the first curvature S1 and the second curvature S2. The curvature of the first concave mirror 3 may also be defined by a greater one of the first curvature S1 and the second curvature S2.

The second concave mirror 5 includes the reflective surface 5a. The reflective surface 5a has a third curvature S3 and a fourth curvature S4. The third curvature S3 is defined in the same manner as or in a similar manner to the first curvature S1. The fourth curvature S4 is defined in the same manner as or in a similar manner to the second curve S2.

As illustrated in FIG. 17, the first concave mirror 3 tilts at the angle θ1 relative to the first virtual plane Pi1 including the display surface 2a. The tilt angle θ1 is formed between the display surface 2a and the tangent plane T1 of the first concave mirror 3. As illustrated in FIG. 17, the second concave mirror 5 tilts at the tilt angle θ2 relative to the second virtual plane Pi2 including the virtual imaging plane 9 of the aerial image R. The tilt angle θ2 is formed between the virtual imaging plane 9 of the aerial image R and a tangent plane T2 of the second concave mirror 5. The tangent plane T2 is tangent to the reflective surface 5a at a vertex (also referred to as an original point of the freeform surface) of the second concave mirror 5.

The first virtual plane Pi1, the second virtual plane Pi2, the tangent plane T1, and the tangent plane T2 are defined in a space, but can be clearly illustrated in a design drawing displayed on, for example, a display of a personal computer (PC) terminal using, for example, computer-aided design (CAD) program software.

In the aerial image display device 1C, the first concave mirror 3 may have a greater curvature than the second concave mirror 5, and the tilt angle θ1 may be smaller than the tilt angle θ2. Note that, in the present embodiment, for the first concave mirror 3 having a greater curvature than the second concave mirror 5, the first curvature S1 is greater than the third curvature S3, and the second curvature S2 is greater than the fourth curvature S4.

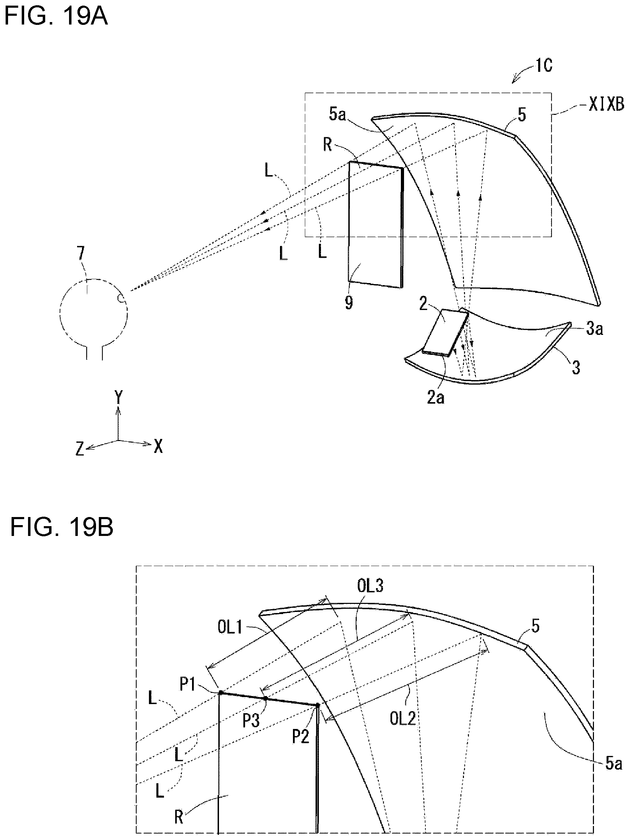

FIG. 19A is a perspective view of the aerial image display device 1C illustrating its main components. FIG. 19B is an enlarged perspective view of XIXB in FIG. 19A. As illustrated in FIGs. 19A and 19B, two points at the peripheral edges of the aerial image R are referred to as a point P1 and a point P2, and a middle point of the side connecting the point P1 and the point P2 of the aerial image R is referred to as a point P3. An optical path length of the image light L from the reflective surface 5a to the point P1 is referred to as an optical path length OL1. An optical path length of the image light L from the reflective surface 5a to the point P2 is referred to as an optical path length OL2. An optical path length of the image light L from the reflective surface 5a to the point P3 is referred to as an optical path length OL3. The inventors have found that the absolute value of a difference between the optical path length OL1 and the optical path length OL3 and the absolute value of a difference between the optical path length OL2 and the optical path length OL3 being less than or equal to a predetermined value can reduce the distortion of the aerial image R viewed by the user.

Hereafter, of the absolute value of the difference between the optical path length OL1 and the optical path length OL3 and the absolute value of the difference between the optical path length OL2 and the optical path length OL3, a greater one is referred to as an optical path length difference OPD. The inventors have found that the curvature of the first concave mirror 3 greater than the curvature of the second concave mirror 5 and the tilt angle $\theta$1 smaller than the tilt angle $\theta$2 can reduce the optical path length difference OPD to less than or equal to a predetermined value. The curvature of the first concave mirror 3 greater than the curvature of the second concave mirror 5 and the tilt angle $\theta$1 smaller than the tilt angle $\theta$2 can reduce the likelihood that the image light L reflected from the first concave mirror 3 travels toward the display 2, and can also reduce the angle at which the image light L is incident on the first concave mirror 3. This is expected to reduce the distortion of the aerial image R. When the aerial image display device 1C is configured to allow the user 7 to view the aerial image R that is rectangular as illustrated in FIG. 19A, the points P1 and P2 are located at the respective ends of the upper side of the aerial image R (points at which the distortions are likely to be greatest) as illustrated in FIG. 19B. This can effectively reduce the distortion of the aerial image R. The predetermined value may be, for example, 2 mm.

Table 6

| Device No. | $\theta$1 | $\theta$2 | S1 | S2 | S3 | S4 | OPD |
|---|---|---|---|---|---|---|---|
| 1 | 29.64° | 37.92° | 0.22 | 0.27 | 0.18 | 0.22 | 1.38 mm |
| 2 | 30.41° | 46.82° | 0.25 | 0.16 | 0.124 | 0.117 | 0.68 mm |
| 3 | 22.79° | 37.94° | 0.24 | 0.24 | 0.15 | 0.19 | 1.92 mm |
| 4 | 24.25° | 36.67° | 0.22 | 0.22 | 0.15 | 0.19 | 1.98 mm |

Table 6 shows some of example combinations of the tilt angle $\theta$1, the tilt angle $\theta$2, the first curvature S1, the second curvature S2, the third curvature S3, and the fourth curvature S4 that can reduce the optical path length difference OPD to less than or equal to 2 mm. As shown in Table 6, the tilt angle $\theta$1, the tilt angle $\theta$2, the curvature of the first concave mirror 3, and the curvature of the second concave mirror 5 may be designed as appropriate to maintain the curvature of the first concave mirror 3 being greater than the curvature of the second concave mirror 5 and the tilt angle $\theta$1 being smaller than the tilt angle $\theta$2. This can reduce the optical path length difference OPD to less than or equal to 2 mm. This reduces the distortion of the aerial image R viewed by the user. As shown in Table 6, the tilt angle $\theta$1 of the first concave mirror 3 may be less than or equal to about 35°, or less than or equal to about 30°. The tilt angle $\theta$2 of the second concave mirror 5 may be less than or equal to about 50°. Note that the aerial image display device 1 corresponding to a device No. 2 includes the first concave mirror 3 and the second concave mirror 5 each having a smaller size and is thus smaller than the aerial image display device 1 corresponding to each of a device No. 1, a device No. 3 and a device No. 4.

The tilt angle $\theta$1 of the first concave mirror 3 may be about 22 to 31°. The tilt angle $\theta$2 of the second concave mirror 5 may be about 35 to 49°. With the tilt angle $\theta$1 less than 22°, part of the image light L reflected from the first concave mirror 3 may not travel toward the second concave mirror 5 but return to the display surface 2a. With the tilt angle $\theta$1 greater than 31°, the image light L reflected from the first concave mirror 3 may be more distorted. With the tilt angle $\theta$2 less than 35°, the virtual imaging plane 9 of the aerial image R may tilt with respect to a direction in which the user 7 views. With the tilt angle $\theta$2 greater than 49°, the image light L reflected from the second concave mirror 5 may be more distorted. Each of the tilt angles $\theta$1 and $\theta$2 is not limited to the above, and may vary depending on factors such as the size, the shape, and the angle of field (spread of the image light L) of the display surface 2a of the display 2.

In the present embodiment, for example, a combined value of the tilt angles $\theta$1 and $\theta$2 may be, but not limited to, any one of the combined values described below.

Combined value 1: $\theta$1 = 29.64°, $\theta$2 = 37.92°
Combined value 2: $\theta$1 = 30.41°, $\theta$2 = 46.82°
Combined value 3: $\theta$1 = 22.79°, $\theta$2 = 37.94°
Combined value 4: $\theta$1 = 24.25°, $\theta$2 = 36.67°

The tilt angle $\theta$1 may deviate by about -1.5 to +1.5°, and the tilt angle $\theta$2 may deviate by about -1.0 to 2.0°. When the tilt angles $\theta$1 and $\theta$2 deviate within these ranges, the distortion of the aerial image R may be easily reduced to less than or equal to a predetermined value (e.g., 10%).

In the aerial image display device 1C, the curvature S1 and the curvature S2 of the first concave mirror 3 are respectively greater than the curvature S3 and the curvature S4 of the second concave mirror 5. This allows the first concave mirror 3 that reflects the image light L emitted from the display 2 toward the second concave mirror 5 to be located closer to the display 2. This reduces the space (creates more compact space) occupied by the display 2 and the reflective optical system 8, thus reducing the size of the aerial image display device 1C. The size of the aerial image display device 1C is reduced to reduce the optical path length of the image light L between the display surface 2a of the display 2 and the reflective surface 5a of the second concave mirror 5. This can reduce the loss of the image light L due to, for example, unintended scatter or interference. The aerial image display device 1C can thus have higher display quality.

In one or more embodiments of the present disclosure as described above, the aerial image display device 1C can have a smaller size, and can have higher display quality of the aerial image R.

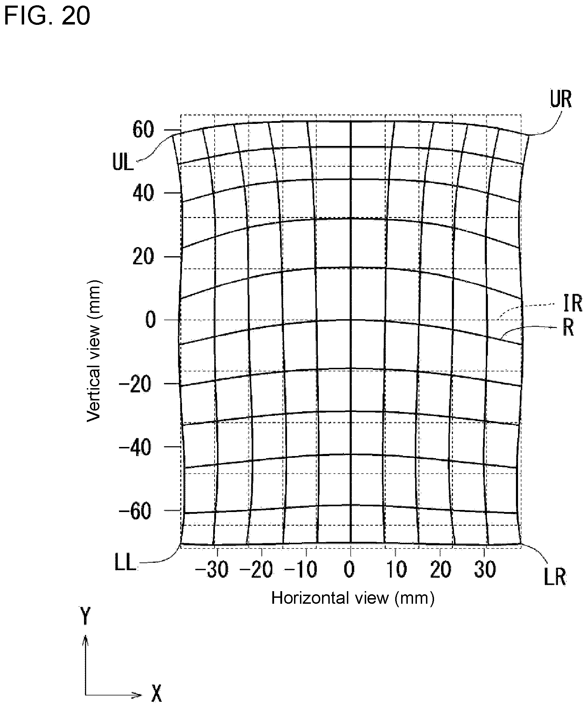

FIG. 20 is a diagram of a result of the simulation illustrating the aerial image R viewed by the user 7 of the aerial image display device 1C. In FIG. 20, to facilitate visual understanding of the distortion of the aerial image R, the aerial image R has a lattice pattern as indicated by the coordinate axes of the distortion direction and the distortion amount. In FIG. 20, solid lines indicate the aerial image R viewed by the user 7, and broken lines indicate the ideal aerial image IR with no distortion.

As illustrated in FIG. 20, the distortion of the aerial image R is likely to occur at the outer periphery of the aerial image R, and the distortion is likely to be greater specifically at the four corners (the lower right corner LR, the upper right corner UR, the lower left corner LL, and the upper left corner UL) of the aerial image R. Table 7 shows the distortions of the aerial image R in FIG. 4 at the corners LR, UR, LL, and UL with respect to the ideal aerial image IR. As shown in Table 7, the aerial image display device 1C reduces the distortion at each of the corners LR, UR, LL, and UL to less than or equal to 7%.

Table 7

|  | X-component | Y-component |
|---|---|---|
| LR | 0.1% | -0.6% |
| UR | 1.5% | -6.4% |
| LL | 0.1% | -0.6% |
| UL | 1.5% | -6.4% |

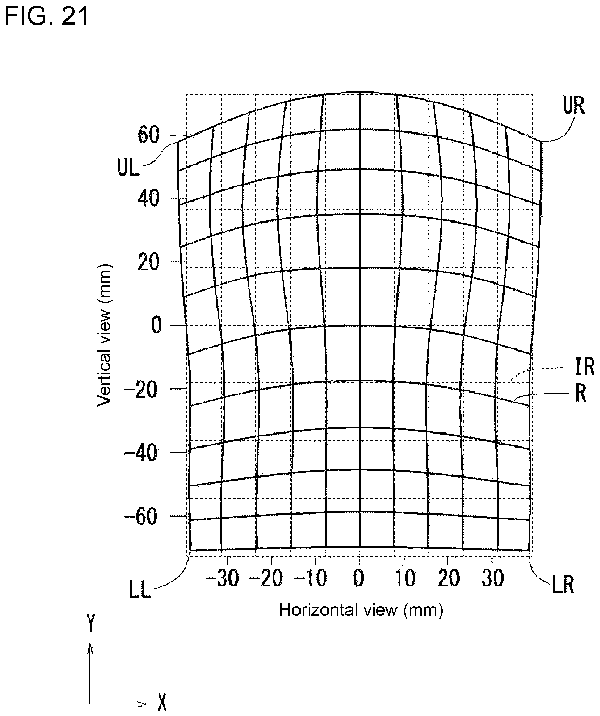

FIG. 21 is a diagram of a result of the simulation illustrating the aerial image R viewed by a user of an aerial image display device that does not include the features of the aerial image display device 1C and has the optical path length difference OPD greater than 2 mm. In FIG. 21, solid lines indicate the aerial image R viewed by the user 7, and broken lines indicate the ideal aerial image IR with no distortion. Table 8 shows the distortions of the aerial image R in FIG. 21 at the corners LR, UR, LL, and UL with respect to the ideal aerial image IR.

Table 8

|  | X-component | Y-component |
|---|---|---|
| LR | -0.2% | -1.8% |
| UR | 3.5% | -19.4% |
| LL | -0.2% | -1.8% |
| UL | 3.5% | -19.4% |

As shown in Table 8, with the optical path length difference OPD greater than or equal to 2 mm, the distortion of the aerial image R is greater at each of the four corners, and a Y-component of the distortion is particularly greater at the upper right corner UR and the upper left corner UL.

As described above, the aerial image display device 1C can reduce the distortion of the aerial image R viewed by the user 7. Thus, the aerial image display device 1C can have higher display quality of the aerial image.

Table 9

|  | X-component | Y-component |
|---|---|---|
| LR | -0.9% | -0.6% |
| UR | -0.3% | -2.7% |
| LL | -0.9% | -0.6% |
| UL | -0.3% | -2.7% |

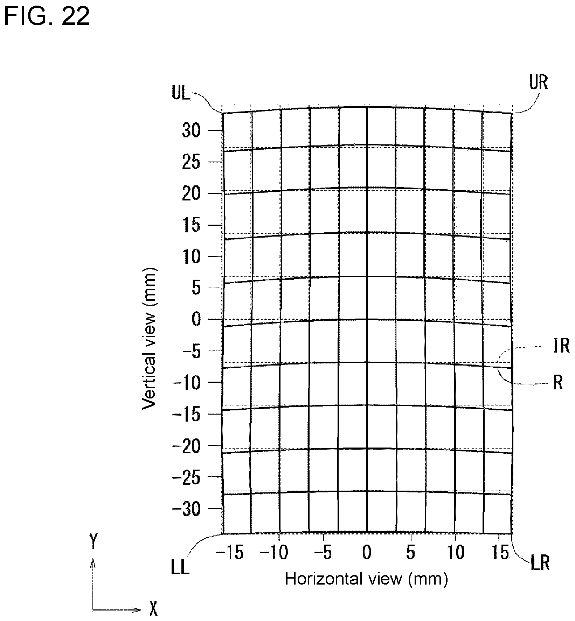

FIG. 22 is a diagram of a result of the simulation illustrating the aerial image R viewed by the user 7 of the aerial image display device 1C with a smaller size. The smaller aerial image display device 1C is the aerial image display device 1 corresponding to the device No. 2 in Table 6. In FIG. 22, solid lines indicate the aerial image R viewed by the user 7, and broken lines indicate the ideal aerial image IR with no distortion.

As illustrated in FIG. 22, the distortion of the aerial image R is likely to occur at the outer periphery of the aerial image R, and the distortion is likely to be greater specifically at the four corners (the lower right corner LR, the upper right corner UR, the lower left corner LL, and the upper left corner UL) of the aerial image R. Table 9 shows the distortions of the aerial image R in FIG. 22 at the corners LR, UR, LL, and UL with respect to the ideal aerial image IR. As shown in Table 9, the aerial image display device 1 reduces the distortion at each of the corners LR, UR, LL, and UL to less than or equal to 3%. As described above, the aerial image display device 1C with a smaller size can reduce the distortion of the aerial image R.

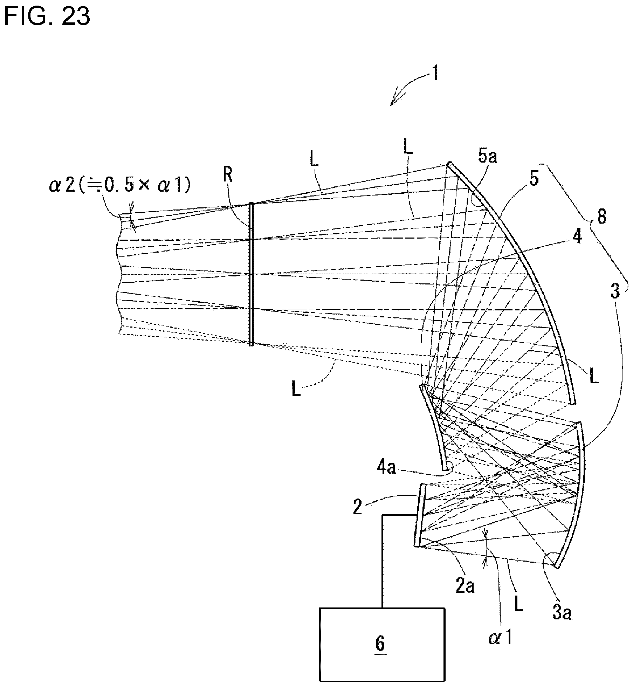

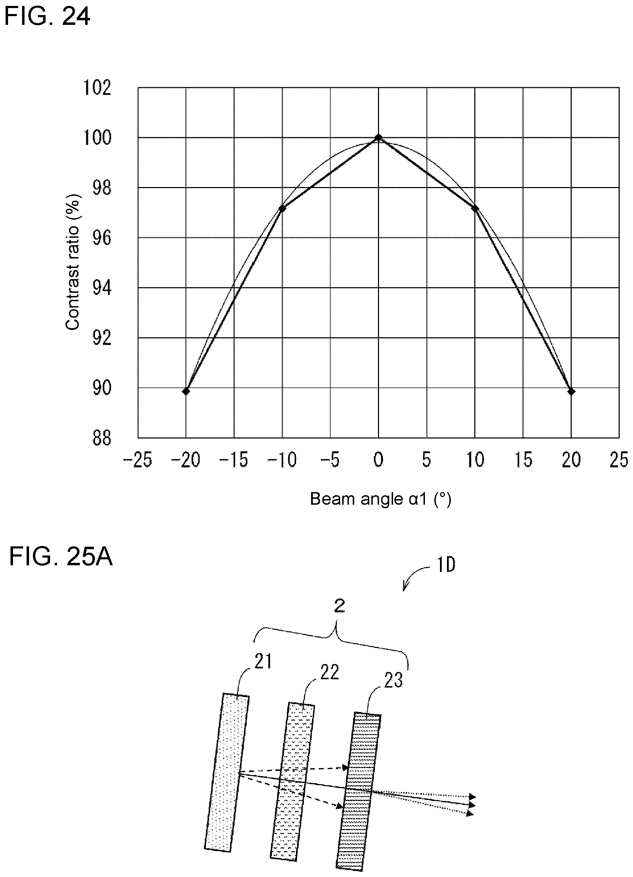

FIG. 23 is a side view of the aerial image display device 1 in FIG. 1B illustrating its main components for describing the spread of the light beams. As illustrated in FIG. 23, the spread of the light beams (viewing angle) of the aerial image R depends on the spread of the light beams from the display. For example, peripheral light spreading to surround the main light beam from a light spot in the aerial image R has a contrast ratio greater than or equal to 90%. The peripheral light has a light beam angle (also referred to as the angle of field) $\alpha 2$ that is about a half of a light beam angle $\alpha 1$ with respect to the display 2. As shown in FIG. 24, the peripheral light having the contrast ratio of 90% with respect to the main light beam from the liquid crystal display as the display 2 has the light beam angle $\alpha 1$ of 20°. Thus, the peripheral light having the contrast ratio of 90% with respect to the main light beam in the aerial image R has the light beam angle $\alpha 2$ of about 10°. As described above, to improve the contrast of the aerial image R, the spread of the light beams of the image light emitted from the display 2 is to be reduced.

FIG. 25A illustrates an aerial image display device 1D according to another embodiment. The aerial image display device 1D has the same components as or similar components to those of the aerial image display device 1 in FIG. 1B except for the structures of the display 2. Like reference numerals denote the same components as or similar components to those of the aerial image display device 1. Such components will not be described. FIG. 25A is a side view of the display 2 in the aerial image display device 1D, including a viewing angle control film 23 as a viewing angle controller in addition to the components of the aerial image display device 1 in FIG. 1B. The display 2 in the aerial image display device 1D includes a backlight 21, a liquid crystal display panel 22, and the viewing angle control film (also referred to as a louver) 23. The viewing angle control film 23 may include, for example, a louver film including a light-transmissive layer of transparent silicone rubber and a light-shielding layer of black silicone rubber alternately stacked in a direction (plane direction) orthogonal to the thickness direction, and a transparent resin film bonded to front and rear surfaces of the louver film. Examples of the viewing angle control film 23 described above include "Shin-Etsu VCF" manufactured by Shin-Etsu Polymer Co., Ltd. The viewing angle control film 23 may be bonded to a display surface of the liquid crystal display panel 22 with, for example, a transparent adhesive layer, transparent adhesive tape, or a transparent adhesive film. The viewing angle control film 23 may be spaced from the liquid crystal display panel 22 to create a gap between the viewing angle control film 23 and the liquid crystal display panel 22.

The viewing angle control film 23 reduces the spread of the light beams of the image light emitted from the display surface of the liquid crystal display panel 22 to restrict the viewing angle to a narrower range. For example, the viewing angle control film 23 restricts the light beam angle $\alpha 1$ of the peripheral light having the contrast ratio of 90% with respect to the main light beam from the liquid crystal display panel 22 to a range of about -20 to +20° with respect to an optical axis direction of central light having the maximum luminance. Thus, the peripheral light having the contrast ratio of 90% with respect to the main light beam in the aerial image R has the light beam angle $\alpha 2$ of about a half of the light beam angle $\alpha 1$. This improves the contrast of the aerial image R.

In the structure in FIG. 25A, a self-luminous display panel may be used in place of the backlight 21 and the liquid crystal display panel 22. The self-luminous display panel may include self-luminous elements, such as LED elements, OEL elements, OLED elements, and semiconductor LD elements, arranged in a matrix on a substrate such as a glass substrate.

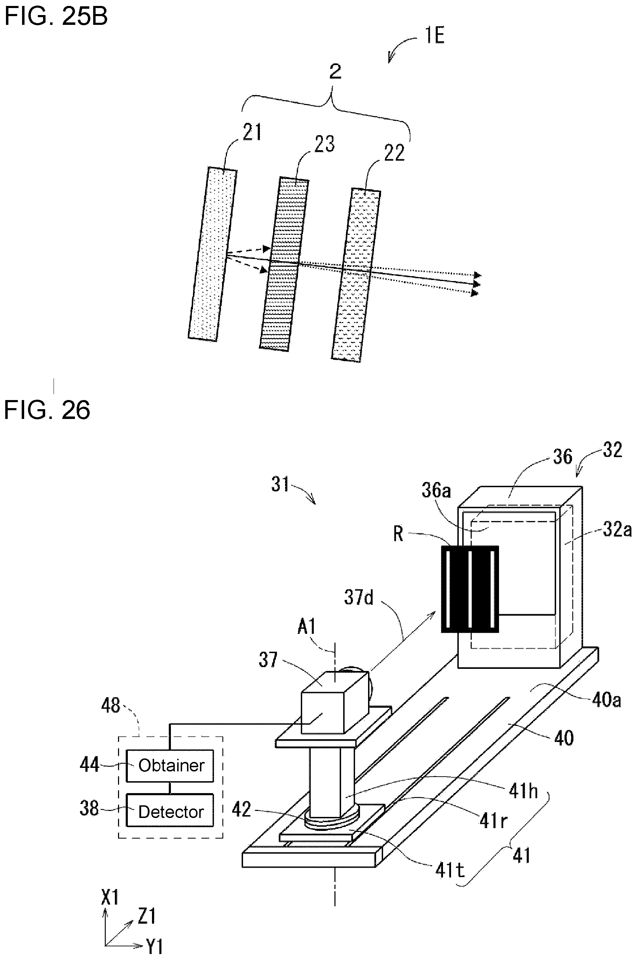

FIG. 25B illustrates an aerial image display device 1E according to another embodiment. The aerial image display device 1E has the same components as or similar components to those of the aerial image display device 1 in FIG. 1B except for the structures of the display 2. Like reference numerals denote the same components as or similar components to those of the aerial image display device 1. Such components will not be described. FIG. 25B is a side view of the display 2 in the aerial image display device 1E, including the viewing angle control film 23 in addition to the components of the aerial image display device 1 in FIG. 1B. The display 2 includes the viewing angle control film 23 between the backlight 21 and the liquid crystal display panel 22. The viewing angle control film 23 may be bonded to a light emitting surface of the backlight 21 or a non-display surface of the liquid crystal display panel 22 with, for example, a transparent adhesive layer, transparent adhesive tape, or a transparent adhesive film. The viewing angle control film 23 may be located in a space between the backlight 21 and the liquid crystal display panel 22 at a distance from the backlight 21 and from the liquid crystal display panel 22.

The viewing angle control film 23 reduces the spread of the light beams of the light output from the light emitting surface of the backlight 21 to restrict the viewing angle to a narrower range. For example, the viewing angle control film 23 restricts the light beam angle $\alpha 1$ of the peripheral light having the contrast ratio of 90% with respect to the main light beam from the backlight 21 to a range of about -20 to +20° with respect to an optical axis direction of central light having the maximum luminance. Thus, the peripheral light having the contrast ratio of 90% with respect to the main light beam in the aerial image R has the light beam angle $\alpha 2$ of about a half of the light beam angle $\alpha 1$. This improves the contrast of the aerial image R.

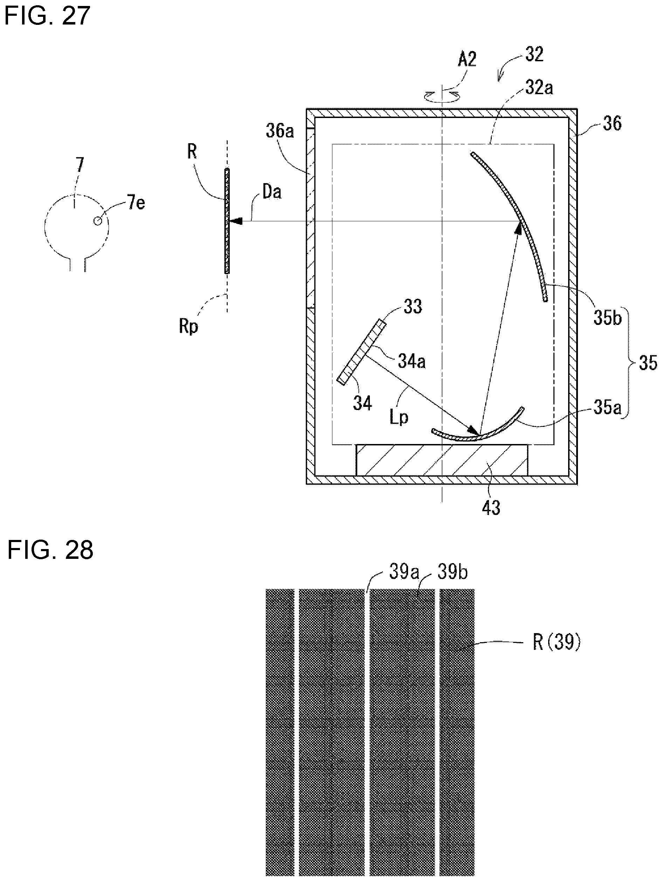

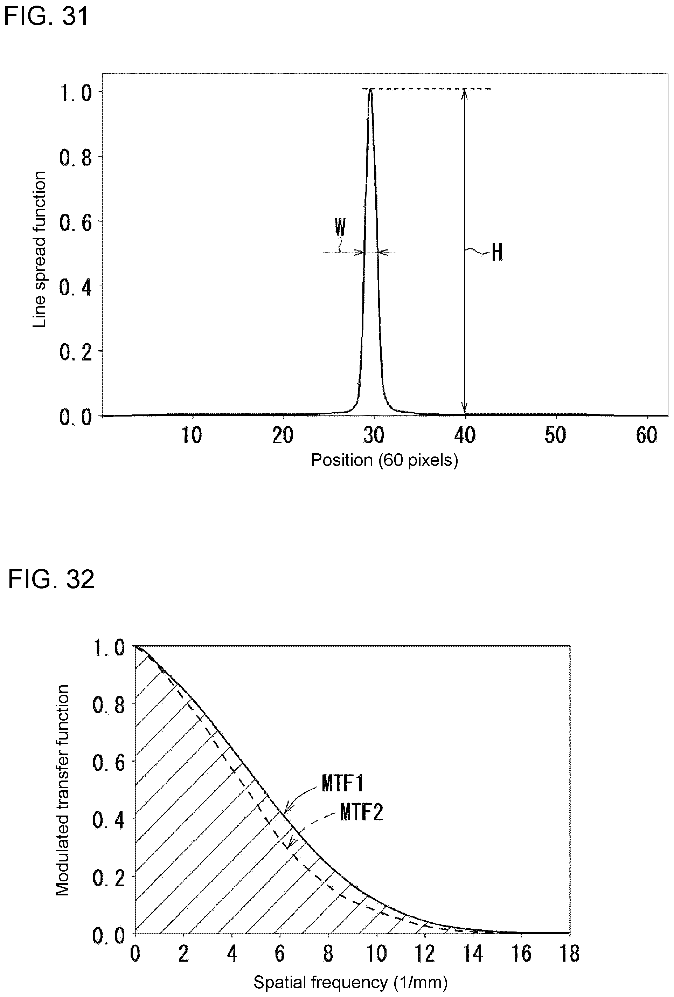

FIG. 26 is a perspective view of an MTF measurement device (also referred to as a resolution measurement device) 31. The MTF measurement device 31 includes an aerial image display device 32, an imaging device 37 such as a camera, and a detector 38. The MTF measurement device 31 may include a device mount 40. The aerial image display device 32 and the imaging device 37 may be mounted on the device mount 40. As illustrated in FIG. 27, the aerial image display device 32 includes an image display 33 to form the aerial image R as a real image from image light Lp emitted from the image display 33. The MTF measurement device 31 includes the detector 38 that calculates the MTF or an MTF area of the aerial image R based on a captured image within an imaging plane (also referred to as a virtual imaging plane) Rp of the aerial image R. The MTF area is numerically about 10 to 20 times greater than values of a line spread function (shown in FIG. 31) of a luminance distribution waveform and the MTF. For example, in the graph in FIG. 32, the MTF value is about 0.4 at the spatial frequency of 6, but the MTF area is about 8 (about 20 times the MTF value). The MTF area may thus be used as an index for comparing the resolutions to allow accurate comparison of the resolutions.

As illustrated in FIG. 27, the aerial image display device 32 may include a housing 36. In this case, components 32a of the aerial image display device 32, such as the image display 33 and an optical system 35, are accommodated in the housing 36. The housing 36 may be made of resin, metal, or ceramic. The components 32a may include, for example, a circuit board, a wire, a cable, a heat dissipator such as a heat sink, a frame-like holder for holding a first concave mirror 35a, a frame-like holder for holding a second concave mirror 35b, an adjuster for adjusting an angle and a position of the first concave mirror 35a, and an adjuster for adjusting an angle and a position of the second concave mirror 35b. The housing 36 at least partially includes, as a portion facing the imaging device 37, a light-transmissive member 36a for transmitting the image light Lp emitted from the components 32a. The aerial image display device 32 may include a second rotator 43 for rotating the entire components 32a. The second rotator 43 controls the entire components 32a of the aerial image display device 32 to rotate about a second rotation axis A2. This allows adjustment of an optical axis direction Da of the aerial image R. The image display 33 includes a display panel 34. The display panel 34 includes a display surface 34a to display an image formed as the aerial image R.

The optical axis direction Da of the aerial image R may be orthogonal to the virtual imaging plane Rp. The virtual imaging plane Rp is a virtual plane on which the aerial image R is formed in a space. The imaging device 37 is expected to represent the eyes 7e of the user 7 as illustrated in, for example, FIG. 27, and captures the aerial image R formed by the aerial image display device 32. The imaging device 37 is located in front of the aerial image display device 32. More specifically, the imaging device 37 is spaced from the aerial image display device 32 in the optical axis direction Da of the aerial image R. The imaging device 37 may capture the aerial image R in an imaging direction 37d. The imaging direction 37d may be aligned with the optical axis direction Da of the aerial image R. To align the imaging direction 37d with the optical axis direction Da of the aerial image R, the detector 38 may control a first rotator 42 (illustrated in FIG. 26) to rotate the imaging device 37 about a predetermined rotation axis (e.g., a first rotation axis A1 illustrated in FIG. 26).

The imaging device 37 may include multiple image sensors. The image sensor may be, for example, a charge-coupled device (CCD) image sensor or a complementary metal-oxide semiconductor (CMOS) image sensor. The imaging device 37 may be a camera (e.g., a CCD camera) including the image sensor and an optical device such as an objective lens. In the imaging device 37, an aperture value (also referred to as an F value) may be changeable. In the imaging device 37, the aperture value may be changeable within, for example, a range of 2 to 22. The imaging device 37 may tilt relative to an upper surface 40a of the device mount 40. More specifically, the imaging device 37 may have its height direction (e.g., a direction orthogonal to an upper surface of the imaging device 37) tilting by about 3 to 5° about the rotation axis parallel to its depth direction (Z1 direction).

The detector 38 may function as a controller and a computation processor. The MTF measurement device 31 may include an obtainer 44. The obtainer 44 may function as a storage for image data. The detector 38 and the obtainer 44 may be included in a measurement device 48 (illustrated in FIG. 26). The measurement device 48 may be included in a computing device such as a personal computer (PC), or may be included in the imaging device 37. The measurement device 48 may be a circuit board device including a control circuit and a computation circuit. Signal transmission and reception between the detector 38 and the imaging device 37, signal transmission and reception between the obtainer 44 and the imaging device 37, and signal transmission and reception between the obtainer 44 and the detector 38 may be performed by at least one selected from the group consisting of a wired communication method, a wireless communication method, and an infrared communication method.

The detector 38 may function as a controller in the MTF measurement device 31. More specifically, the detector 38 may be connected to each of components of the MTF measurement device 31 to control the corresponding component.

The detector 38 may include one or more processors. The processors may include at least one of a general-purpose processor that reads a specific program to perform a specific function or a processor dedicated to specific processing. The dedicated processor may include an ASIC. The processors may include a PLD. The PLD may include an FPGA. The detector 38 may include at least one of an SoC or an SiP in which one or more processors cooperate with one another.

The detector 38 may include an arithmetic unit for performing computation to obtain the MTF or the MTF area based on image data of the captured image, such as a test pattern of the aerial image R. More specifically, when the imaging device 37 has generated the captured image of at least one imaging portion within the imaging plane Rp, the detector 38 obtains the image data of the captured image. The control for obtaining the image data may be performed with the obtainer 44 (illustrated in FIG. 26). The obtainer 44 may be a temporary storage device such as a buffer memory. For example, when having generated the captured image, the imaging device 37 may automatically output the image data of the captured image to the obtainer 44. For example, when having determined, using determination signals, whether the obtainer 44 has available storage space and whether the obtainer 44 has completed outputting the previous image data to the detector 38, the imaging device 37 may output the image data to the obtainer 44. The detector 38 obtains the image data of the captured image from the imaging device 37, performs computation based on the image data, and calculates the MTF and the MTF area of the captured image.

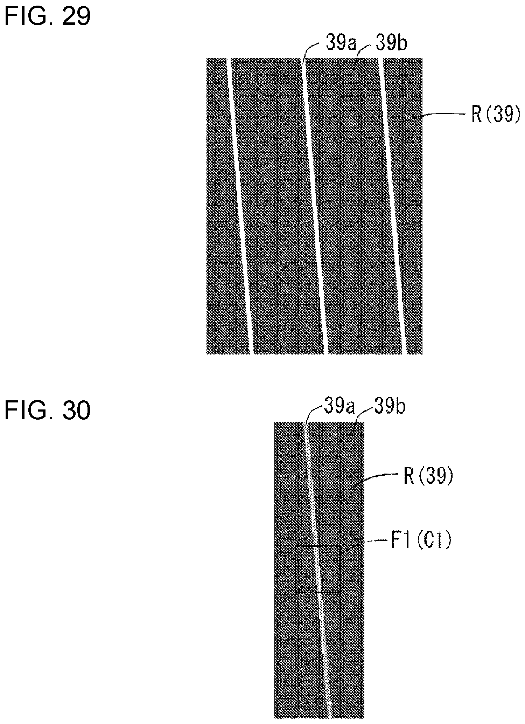

A test pattern 39 for calculating the MTF or the MTF area may be a repetition pattern of a first strip image 39a and a second strip image 39b, as illustrated in FIG. 28. FIG. 28 illustrates an ideal test pattern 39 without any blur (no deterioration in resolution). The first strip image 39a and the second strip image 39b may be elongated in a height direction (X1-direction) substantially orthogonal to a width direction (Y1-direction) of the imaging plane Rp. The test pattern 39 may include at least three first strip images 39a. FIG. 28 illustrates an example of the first strip images 39a being white and the second strip images 39b being black, but these strip images are not limited to this example. The first strip image 39a and the second strip image 39b may differ from each other in at least one of the luminance or the color. FIG. 29 illustrates a test pattern 39 for the imaging device 37 having the height direction (e.g., the direction orthogonal to the upper surface of the imaging device 37) tilting by about 3 to 5° about the rotation axis parallel to the depth direction (Z1-direction). FIG. 30 illustrates a test pattern 39 with some blur (some deterioration in resolution).

A distance (also referred to as an imaging distance) between the imaging device 37 and the aerial image R in the depth direction (Z1-direction) may be, for example, 300 to 700 mm, or 500 mm. The imaging distance may be a distance between the imaging device 37 and a position closer to the center of the aerial image R. The imaging device 37 has a predetermined fixed focal length. The predetermined focal length may match the imaging distance. Hereafter, unless otherwise specified, the imaging distance is set to the focal length of the imaging device 37. The imaging distance may be changeable. For example, the detector 38 may control a mover 41 to change the imaging distance. The detector 38 may control the mover 41 to detect a position at which the imaging device 37 has the focal length matching the imaging distance.

The detector 38 may control the imaging device 37 to have an aperture value set to less than or equal to 3 (e.g., 2.3). The aperture value in the imaging device 37 can be set to a relatively smaller value to reduce (shorten) a depth of field (also referred to as a focal depth of field) of the imaging device 37. More specifically, this can reduce (narrow) the area in which the subject is in focus in the depth direction. This allows accurate detection of the position of the aerial image R in the depth direction.

As illustrated in FIG. 26, the MTF measurement device 31 may include the mover 41 to move the imaging device 37 in the depth direction. The mover 41 is configured to move the imaging device 37 by a predetermined distance ΔZ each time. The predetermined distance ΔZ may be, for example, about 1 to 5 mm or about 1 to 2 mm. The mover 41 includes, for example, rails 41r, a holder (also referred to as a support) 41h, and a movable table (also referred to as a slider) 41t having an upper surface on which the holder 41h is placed. The rails 41r are located on the upper surface 40a of the device mount 40 and extends in the depth direction. The holder 41h supports and holds the imaging device 37. With the holder 41h holding the imaging device 37, the movable table 41t moves on the rails 41r in the depth direction. The detector 38 may control the movable table 41t to move in the depth direction.

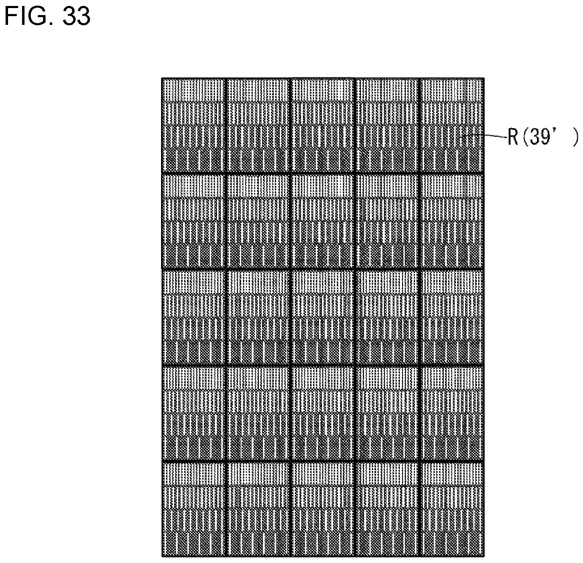

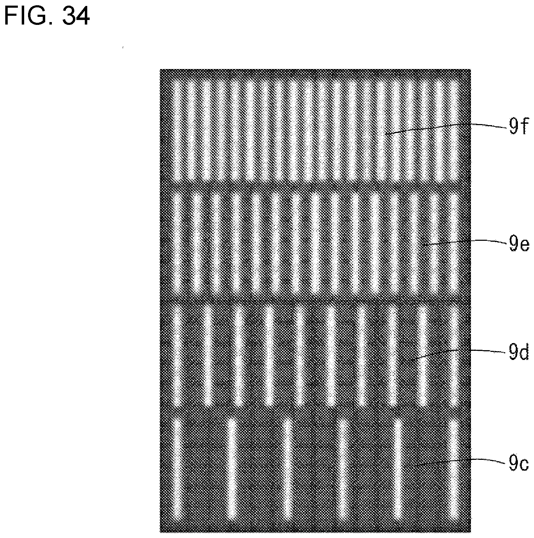

The MTF may be calculated with the methods described below. With a first calculation method, the MTF is determined based on the luminance distribution waveform (shown in FIG. 31) of the first strip image (white line) 39a in the test pattern 39. With a second calculation method, the MTF is calculated with a chart method illustrated in FIGs. 33 and 34.

The first calculation method will be described. For example, the imaging device 37 first captures an image of an imaging portion F1 in the first strip image (white line) 39a illustrated in FIG. 30, and obtains image data of a captured image C1. The image data of the captured image C1 is processed by the detector 38 to calculate the luminance distribution waveform as shown in FIG. 31. The luminance distribution waveform may be calculated for each of multiple imaging portions in one first strip image 39a, and may be averaged. The luminance distribution waveform may also be calculated for one imaging portion in each of the multiple first strip images 39a, and may be averaged. The luminance distribution waveform is a pulsed waveform showing a change in luminance at different positions in the Y1-direction. The horizontal axis in FIG. 31 indicates a change in the position in the Y1-direction. In FIG. 31, of multiple pixels (e.g., 60 pixels) in the Y1-direction, the luminance distribution waveform is displayed with its highest value (peak value) at the position of the 30th pixel. The luminance distribution waveform is also referred to as a line spread function (LSF). As shown in FIG. 31, the line spread function LSF has a substantially Gauss shape. The line spread function may be characterized by a peak value H and a half width W. The peak value H is a maximum value of the line spread function. For example, for a greater peak value H of the line spread function, the imaging distance can be determined to be closer to the focal length of the imaging device 37. The half width W corresponds to the width of the line spread function having the luminance substantially 50% of the peak value H. The number of pixels is used as a unit. For example, for a smaller half width W of the line spread function, the imaging distance can be determined to be closer to the focal length of the imaging device 37. For example, for a greater combined value obtained by dividing the peak value H by the half width W, the imaging distance can be determined to be closer to the focal length of the imaging device 37.

The line spread function LSF has a half width as an index indicating the degree of the spread of the pulsed (chevron-shaped) function. The half width includes a full width at half maximum (FWHM) and a half width at half maximum (HWHM) that is half the value of the FWHM. A half width typically refers to the FWHM. In one or more embodiments of the present disclosure, the half width thus refers to the FWHM unless otherwise specified. More specifically, in the luminance distribution waveform shown in FIG. 31, the half width (FWHM) corresponds to a value indicating the spread of the line spread function decreasing monotonously around the peak value H, and corresponds to a distance between positions, at both sides of the peak value H, at each of which the line spread function is half the peak value H.

The line spread function LSF is then transformed using Fourier transform to calculate the modulated transfer function MTF. Note that Fourier transform is, for example, the operation of transforming the function in the pulsed waveform to a curve (e.g., a sinusoidal waveform curve, a cosine waveform curve, or a continuous curve as a combined form of the sinusoidal waveform curve and the cosine waveform curve) expressed by continuous values in the frequency range.

$$MTF(v) = \left| C \int_{-\infty}^{\infty} LSF(x) e^{-2\pi i x v} dx \right| \tag{3}$$

In Formula 3, LSF(x) collectively expresses the line spread function LSF as the function at a position x in the captured image, MTF(v) collectively expresses the MTF as the function at a spatial frequency v, and C is a constant for normalizing the MTF(0) to "1". FIG. 32 is a graph showing an example of the MTF (v). The MTF (v) is an index indicating the resolution based on the contrast of the captured image. For example, for a greater MTF value at a higher spatial frequency v (about 6 to 16 cycles/mm), the imaging distance can be determined to be closer to the focal length of the imaging device 37. In Formula 1, the integrated section may replace its upper and lower limits with finite values (e.g., the spatial frequency of 0 to 18 (1/mm)). This can reduce the processing load of the detector 38. The MTF may be calculated with Formula 1 using, for example, a discrete Fourier transform method or a fast Fourier transform method.

In FIG. 32, a solid line indicates an MTF1 that is the MTF of the aerial image R equivalent to the MTF in the image display 33. The MTF1 is thus an ideal MTF. A broken line indicates an MTF2 that is the MTF of the aerial image R reduced from the MTF in the image display 33 (with lower resolution).

The detector 38 may calculate an area (hereafter also referred to as the MTF area) S that is formed by integrating the MTF at the spatial frequency axis, as expressed by Formula 4 below. In Formula 4, the integrated section may replace its upper limit with a finite value (e.g., the spatial frequency of 0 to 18 (1/mm)). This can reduce the processing load of the detector 38.

$$S = \left| \int_{0}^{\infty} MTF(v) dv \right| \tag{4}$$

The MTF area is, for example, an area (hatched area) of the MTF1 indicated with the solid line in the graph in FIG. 32. When the resolution of the aerial image R is decreased, the MTF area in the imaging portion (an area of the MTF2 indicated with the broken line in the graph in FIG. 32) is reduced from the upper limit value (the area of the MTF1 indicated with the solid line in the graph in FIG. 32). With the MTF area varying depending on the aperture value of the imaging device 37, a specific value cannot be applied, but in the example in FIG. 32, the upper limit value (ideal value) is about 7 to 9.

The second calculation method will now be described. To calculate the MTF with the chart method, the detector 38 controls the aerial image display device 32 to form an aerial image 39' as illustrated in FIG. 33. FIG. 33 illustrates an ideal aerial image 39' without any blur (no deterioration in resolution). In the aerial image 39', the imaging portion is configured to include multiple square wave charts 9c, 9d, 9e, and 9f each at a different spatial frequency (a pitch in a white strip image). As illustrated in FIG. 34, the captured image thus includes the multiple square wave charts 9c to 9f each at the different spatial frequency v. The detector 38 controls the imaging device 37 to capture the aerial image 39', generate the captured image of the imaging portion, and output the image data of the captured image. The imaging device 37 may not tilt with respect to the upper surface 40a of the device mount 40 when capturing the aerial image 39'. The detector 38 calculates, for the captured image, a maximum value av and a minimum value bv in luminance as well as a contrast cv = (av - bv)/(av + bv) for a partial image capturing each of the square wave charts 9c to 9f. The detector 38 normalizes the contrast cv at each of the spatial frequencies v by the contrast cv at a lowest spatial frequency v, and calculates a square wave response function (SWRF). The detector 38 transforms the SWRF to a sinusoidal wave response function to calculate the MTF. For transforming the SWRF to the sinusoidal wave response function, a Coltman's formula may be used. The Coltman's formula may be used up to the fourth term or to the twelfth term.

A contrast ratio Cont(u) is expressed by the formula below, where u is the spatial frequency, $I_{max}(u)$ is the maximum luminance, and $I_{min}(u)$ is the minimum luminance.

$$Cont(u) = \frac{Imax(u) - Imin(u)}{Imax(u) + Imin(u)} \tag{5}$$

The SWRF(u) is expressed by Formula 6, where Cont(0) is the contrast ratio at the spatial frequency of 0.

$$SWRF(u) = \frac{Cont(u)}{Cont(0)} \tag{6}$$

The sinusoidal wave response function (MTF) expressed by Formula 7 can be determined using the Coltman's conversion formula.

$$MTF(u) = \frac{\pi}{4} \sum_{k=1}^{\infty} B_k \frac{SWRF\{(2k-1)u\}}{(2k-1)} \tag{7}$$

However, Bk = (-1)n(-1)k - 1 when m = n, and Bk = 0 when m > n. In this formula, m is the total number of prime numbers obtained by factorizing (2k - 1) into the prime numbers, and n is the number of types of the prime numbers obtained by factorizing (2k - 1) into the prime numbers. When Formula 7 is used up to, for example, the twelfth term, the MTF is expressed by Formula 8 below.

$$MTF(u) = \frac{\pi}{4}\left\{ SWRF(u) + \frac{SWRF(3u)}{3} - \frac{SWRF(5u)}{5} + \frac{SWRF(7u)}{7} + \frac{SWRF(11u)}{11} - \frac{SWRF(13u)}{13} \right.$$
$$- \frac{SWRF(15u)}{15} - \frac{SWRF(17u)}{17} + \frac{SWRF(19u)}{19} + \frac{SWRF(21u)}{21} + \frac{SWRF(23u)}{23}$$
$$\left. - \frac{SWRF(29u)}{29} + \cdots \right\} \tag{8}$$

The aerial image display device 10, 1, 1A, 1B, 1C, 1D, or 1E may be mounted on a movable body, such as a car, a vessel, or an aircraft, or in other words, a vehicle. Examples of the vehicle include an automobile, an industrial vehicle, a railroad vehicle, a community vehicle, and a fixed-wing aircraft traveling on a runway. Examples of the automobile include a passenger vehicle, a truck, a bus, a motorcycle, and a trolley bus. Examples of the industrial vehicle include an industrial vehicle for agriculture and an industrial vehicle for construction. Examples of the industrial vehicle include a forklift and a golf cart. Examples of the industrial vehicle for agriculture include a tractor, a cultivator, a transplanter, a binder, a combine, and a lawn mower. Examples of the industrial vehicle for construction include a bulldozer, a scraper, a power shovel, a crane vehicle, a dump truck, and a road roller. The vehicle may include a human-powered vehicle. Examples of the vessel include a jet ski, a boat, and a tanker. Examples of the aircraft include a fixed-wing aircraft and a rotary-wing aircraft. The aerial image display device 10, 1, 1A, 1B, 1C, 1D, or 1E may be located in a dashboard of the movable body.

The movable body including the aerial image display device 10, 1, 1A, 1B, 10C, 10D, or 10E allows the user (e.g., a driver of the movable body) to view the aerial image R having less distortion, higher luminance and a higher contrast ratio. The aerial image R may include information about a state (e.g., speed, acceleration, or a posture) of the movable body, and surroundings of the movable body.

The aerial image display device 10, 1, 1A, 1B, 1C, 1D, or 1E may include a camera to capture an image of the face of the user 7. The camera may be an infrared camera or a visible light camera. The camera may include a CCD image sensor or a CMOS image sensor. The controller 6 may detect the positions of the eyes of the user 7 based on captured image data output from the camera. The controller 6 may deform the image displayed on the display surface 2a based on the detected positions of the eyes. This structure can reduce the distortion of the aerial image R although the positions of the eyes of the user 7 are moved. For the aerial image display device 10, 1, 1A, 1B, 1C, 1D, or 1E mounted on the movable body, the camera may be attached to the movable body. The camera may be located, for example, in the dashboard or on the dashboard of the movable body.

The aerial image display device 10 may include a drive for moving at least one of the convex mirror 4 or the concave image forming mirror 5. The aerial image display device 1, 1B, 1D, or 1E may include a drive for moving at least one selected from the group consisting of the first concave mirror 3, the convex mirror 4, and the second concave mirror 5. The aerial image display device 1A or 1C may include a drive for moving at least one of the first concave mirror 3 or the second concave mirror 5. The drive may include the adjuster described above. Based on the detected positions of the eyes, the controller 6 may control the drive to move at least one of the convex mirror 4 or the concave image forming mirror 5 in the aerial image display device 10, may control the drive to move at least one selected from the group consisting of the first concave mirror 3, the convex mirror 4, and the second concave mirror 5 in the aerial image display device 1, 1B, 1D, or 1E, or may control the drive to move at least one of the first concave mirror 3 or the second concave mirror 5 in the aerial image display device 1A or 1C. This structure can reduce the distortion of the aerial image R although the positions of the eyes of the user 7 are moved. The drive may include, for example, a motor or a piezoelectric element.

The aerial image display device 10, 1, 1A, 1B, 1C, 1D, or 1E may be a head-up display to be installed in the vehicle. In this case, for example, a part of a front windshield in the vehicle may be a reflector. The reflector may be used as the concave image forming mirror 5 or the second concave mirror 5. The aerial image display device 10, 1, 1A, 1B, 1C, 1D, or 1E may use the reflector to allow the user to view the aerial image R. The reflector may be a semi-transmissive reflector (a reflector for transmitting about half of light and reflecting about another half of the light).

As illustrated in FIGs. 1B, 7, and 11, each of the aerial image display devices 1, 1A, and 1B may include the display 2 (and the convex mirror 4) between the first concave mirror 3 and the second concave mirror 5 when viewed laterally. In other words, in each of the aerial image display devices 1, 1A, and 1B, the first concave mirror 3 may be located lowermost and the second concave mirror 5 may be located uppermost, or the first concave mirror 3 may be located uppermost and the second concave mirror 5 may be located lowermost. In this case, the aerial image display device 1, 1A, or 1B can easily be less tall and be smaller.

In one or more embodiments of the present disclosure, the aerial image display device can have higher display quality of an aerial image.

Although the embodiments of the present disclosure have been described in detail, the present disclosure is not limited to the embodiments described above, and may be changed or varied in various manners without departing from the spirit and scope of the present disclosure.

The technique according to one or more embodiments of the present disclosure may have aspects (1) to (10) described below.

(1) An aerial image display device, comprising:

a display;
a convex mirror configured to reflect image light emitted from the display; and
a concave mirror configured to reflect, in a direction different from a direction toward the convex mirror, the image light reflected from the convex mirror to form an aerial image as a real image,
wherein the concave mirror has a greater curvature than the convex mirror.

(2) An aerial image display device, comprising:

a display;
a first concave mirror configured to reflect, in a direction different from a direction toward the display, image light emitted from the display;
a convex mirror configured to reflect, in a direction different from a direction toward the first concave mirror, the image light reflected from the first concave mirror; and
a second concave mirror configured to reflect, in a direction different from a direction toward the convex mirror, the image light reflected from the convex mirror to form an aerial image as a real image,
wherein Sa1 > Sa2 > Sb, where Sa1 is a curvature of the first concave mirror, Sb is a curvature of the convex mirror, and Sa2 is a curvature of the second concave mirror.

(3) The aerial image display device according to aspect (2), wherein
a maximum diameter of a reflective surface of the second concave mirror is greater than a maximum diameter of a reflective surface of the first concave mirror.
(4) The aerial image display device according to aspect (2) or aspect (3), wherein

each of the first concave mirror and the second concave mirror is a freeform concave mirror, and

the convex mirror is a freeform convex mirror.

(5) The aerial image display device according to any one of aspects (2) to (4), wherein the second concave mirror overlaps the display, the first concave mirror, and the convex mirror when viewed from a rear surface of the second concave mirror in a direction parallel to a virtual imaging plane of the aerial image.

(6) The aerial image display device according to any one of aspects (2) to (5), wherein the second concave mirror includes the display, the first concave mirror, and the convex mirror when viewed from a rear surface of the second concave mirror in a direction parallel to a virtual imaging plane of the aerial image.

(7) The aerial image display device according to any one of aspects (2) to (6), wherein the display includes a display surface substantially parallel to a virtual imaging plane of the aerial image.

(8) The aerial image display device according to any one of aspects (2) to (7), wherein the image light emitted from the display includes a main light beam substantially parallel to an optical axis of the image light.

(9) An aerial image display device, comprising:

a display; and

a reflective optical system configured to reflect image light emitted from the display to form an aerial image as a real image,

wherein the aerial image has a distortion less than or equal to 5%, and has a contrast value greater than or equal to 0.2 at a spatial frequency of 3 to 10 cycles/mm when the contrast value is expressed with a modulation transfer function normalized to have a maximum value of 1.

(10) The aerial image display device according to aspect (9), wherein

the reflective optical system includes

a first concave mirror configured to reflect, in a direction different from a direction toward the display, the image light emitted from the display, and

a second concave mirror configured to reflect, in a direction different from a direction toward the first concave mirror, the image light reflected from the first concave mirror to form the aerial image as the real image, and

the first concave mirror has a greater curvature than the second concave mirror.

(11) The aerial image display device according to aspect (10), wherein each of the first concave mirror and the second concave mirror is a freeform concave mirror.

INDUSTRIAL APPLICABILITY

In the embodiments of the present disclosure, the aerial image display device allows an operation of aerial images without touching, and may be used in, but not limited to, products in various fields described below. Examples of such products include a communication device for communication or conversations using aerial images, a medical interview device that allows doctors to interview patients using aerial images, a navigation device and a driving control device for vehicles such as automobiles, an order reception and registration device used in, for example, shops, an operational panel used in, for example, buildings or elevators, a learning device for teaching or learning classes using aerial images, an office device for business communication or instructions using aerial images, a gaming device used for playing games using aerial images, a projector for projecting images on the ground or walls in, for example, amusement parks or game arcades, a simulation device for simulation using aerial images in, for example, universities or medical organizations, a large display for displaying prices and other information in, for example, markets or stock exchanges, and an imaging viewing device used for viewing aerial images.

REFERENCE SIGNS

10, 1, 1A, 1B, 1C, 1D, 1E     aerial image display device
2     display device
2a     display surface
3     first concave mirror

| 3a | reflective surface |
| 4 | convex mirror |
| 4a | reflective surface |
| 5 | concave mirror (concave image forming mirror, second concave mirror) |
| 5a | reflective surface |
| 6 | controller |
| 7 | user |
| 7e | eye |
| 8, 8A, 8B | reflective optical system |
| 21 | backlight |
| 22 | liquid crystal display panel |
| 23 | viewing angle control film |
| 31 | MTF measurement device |
| 32 | aerial image display device |
| 32a | component |
| 33 | image display unit |
| 34 | display panel |
| 34a | display surface |
| 35 | optical system |
| 35a | first concave mirror |
| 35b | second concave mirror |
| 36 | housing |
| 36a | image light emitting surface |
| 37 | imaging device |
| 37d | imaging direction |
| 38 | detector |
| 39 | test pattern |
| 39a | first strip image |
| 39b | second strip image |
| 39' | aerial image |
| 40 | device mount |
| 41 | mover |
| 41h | holder |
| 41r | rail |
| 41t | movable table |
| 42 | first rotator |
| 43 | second rotator |
| 44 | obtainer |
| 48 | measurement device |
| R | aerial image |
| Rp | imaging plane |

**Claims**

1. An aerial image display device, comprising:

   a display;
   a convex mirror configured to reflect image light emitted from the display; and
   a concave mirror configured to reflect, in a direction different from a direction toward the convex mirror, the image light reflected from the convex mirror to form an aerial image as a real image,
   wherein the concave mirror has a greater curvature than the convex mirror.

2. An aerial image display device, comprising:

   a display;
   a first concave mirror configured to reflect, in a direction different from a direction toward the display, image light emitted from the display;
   a convex mirror configured to reflect, in a direction different from a direction toward the first concave mirror, the image light reflected from the first concave mirror; and
a second concave mirror configured to reflect, in a direction different from a direction toward the convex mirror, the image light reflected from the convex mirror to form an aerial image as a real image,
wherein Sa1 > Sa2 > Sb, where Sa1 is a curvature of the first concave mirror, Sb is a curvature of the convex mirror, and Sa2 is a curvature of the second concave mirror.

3. The aerial image display device according to claim 2, wherein
a maximum diameter of a reflective surface of the second concave mirror is greater than a maximum diameter of a reflective surface of the first concave mirror.

4. The aerial image display device according to claim 2 or claim 3, wherein

each of the first concave mirror and the second concave mirror is a freeform concave mirror, and
the convex mirror is a freeform convex mirror.

5. The aerial image display device according to any one of claims 2 to 4, wherein
the second concave mirror overlaps the display, the first concave mirror, and the convex mirror when viewed from a rear surface of the second concave mirror in a direction parallel to a virtual imaging plane of the aerial image.

6. The aerial image display device according to any one of claims 2 to 5, wherein
the second concave mirror includes the display, the first concave mirror, and the convex mirror when viewed from a rear surface of the second concave mirror in a direction parallel to a virtual imaging plane of the aerial image.

7. The aerial image display device according to any one of claims 2 to 6, wherein
the display includes a display surface substantially parallel to a virtual imaging plane of the aerial image.

8. The aerial image display device according to any one of claims 2 to 7, wherein
the image light emitted from the display includes a main light beam substantially parallel to an optical axis of the image light.

9. An aerial image display device, comprising:

a display; and
a reflective optical system configured to reflect image light emitted from the display to form an aerial image as a real image,
wherein the aerial image has a distortion less than or equal to 5%, and has a contrast value greater than or equal to 0.2 at a spatial frequency of 3 to 10 cycles/mm when the contrast value is expressed with a modulation transfer function normalized to have a maximum value of 1.

10. An aerial image display device, comprising:

a display; and
a reflective optical system configured to reflect image light emitted from the display to form an aerial image as a real image,
wherein the reflective optical system includes

a first concave mirror configured to reflect, in a direction different from a direction toward the display, the image light emitted from the display, and
a second concave mirror configured to reflect, in a direction different from a direction toward the first concave mirror, the image light reflected from the first concave mirror to form the aerial image as the real image, and

a curvature of the first concave mirror is greater than a curvature of the second concave mirror.

11. The aerial image display device according to claim 10, wherein
each of the first concave mirror and the second concave mirror is a freeform concave mirror.

FIG. 1A

FIG. 1B

FIG. 2

FIG. 3

## FIG. 4

## FIG. 5

FIG. 6

Spatial frequency (cycles/mm)

FIG. 7

FIG. 8

FIG. 9

FIG. 10

FIG. 11

FIG. 12

FIG. 13

FIG. 14

FIG. 15

Spatial frequency (cycles/mm)

FIG. 16

Spatial frequency (cycles/mm)

FIG. 17

FIG. 18

FIG. 19A

FIG. 19B

FIG. 20

FIG. 21

FIG. 22

FIG. 23

FIG. 24

FIG. 25A

FIG. 25B

FIG. 26

## FIG. 27

## FIG. 28

FIG. 29

39a 39b

R (39)

FIG. 30

39a 39b

R (39)

F1 (C1)

FIG. 31

FIG. 32

FIG. 33

R(39')

FIG. 34

## INTERNATIONAL SEARCH REPORT

| International application No. |
| --- |
| **PCT/JP2023/012898** |

**A.  CLASSIFICATION OF SUBJECT MATTER**

*G02B 30/56*(2020.01)i; *G02B 17/06*(2006.01)i; *H04N 13/302*(2018.01)i
FI:  G02B30/56; H04N13/302; G02B17/06

According to International Patent Classification (IPC) or to both national classification and IPC

**B.  FIELDS SEARCHED**

Minimum documentation searched (classification system followed by classification symbols)

G02B30/00-30/60; G02B17/00-17/08; H04N13/30-13/398

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
| --- | --- | --- |
| X | US 2020/0264560 A1 (CHEN, Duan-Jun) 20 August 2020 (2020-08-20) paragraphs [0045]-[0047], [0131], fig. 4A-4B, 22A-22B | 1 |
| A | | 2-11 |
| Y | JP 2014-6479 A (SEIKO EPSON CORP.) 16 January 2014 (2014-01-16) paragraph [0015] | 9 |
| Y | JP 2015-191051 A (SONY CORP.) 02 November 2015 (2015-11-02) paragraphs [0027]-[0029], fig. 10, 11 | 9 |
| X | JP 2000-66132 A (HARNESS SOGO GIJUTSU KENKYUSHO K.K.) 03 March 2000 (2000-03-03) paragraphs [0019]-[0031], fig. 1-3 | 10 |
| Y | | 11 |
| X | JP 2002-511596 A (ORO GONE LLC) 16 April 2002 (2002-04-16) paragraphs [0016]-[0028], fig. 1-4 | 10 |
| Y | | 11 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search | Date of mailing of the international search report |
| --- | --- |
| **18 May 2023** | **30 May 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

| | INTERNATIONAL SEARCH REPORT | International application No. |
|---|---|---|
| | | **PCT/JP2023/012898** |

**C.    DOCUMENTS CONSIDERED TO BE RELEVANT**

| Category* | Citation of document, with indication, where appropriate, of the relevant passages | Relevant to claim No. |
|---|---|---|
| Y | JP 2021-173873 A (KYOCERA CORP.) 01 November 2021 (2021-11-01)<br>paragraph [0027], fig. 3 | 11 |
| A | JP 2013-222025 A (DAINIPPON SCREEN MFG. CO., LTD.) 28 October 2013 (2013-10-28)<br>entire text, all drawings | 2-8 |
| A | JP 7-191274 A (CANON INC.) 28 July 1995 (1995-07-28)<br>entire text, all drawings | 2-8 |
| A | JP 2020-177221 A (KUBOTA, Youji) 29 October 2020 (2020-10-29)<br>entire text, all drawings | 1-11 |

Form PCT/ISA/210 (second sheet) (January 2015)

**INTERNATIONAL SEARCH REPORT**
Information on patent family members

International application No.

**PCT/JP2023/012898**

| Patent document cited in search report | | | Publication date (day/month/year) | Patent family member(s) | | | Publication date (day/month/year) |
|---|---|---|---|---|---|---|---|
| US | 2020/0264560 | A1 | 20 August 2020 | WO | 2019/113551 | A1 | |
| | | | | CN | 111201469 | A | |
| JP | 2014-6479 | A | 16 January 2014 | (Family: none) | | | |
| JP | 2015-191051 | A | 02 November 2015 | US | 2015/0279283 | A1 | |
| | | | | paragraphs [0056]-[0058], fig. 10, 11 | | | |
| | | | | KR | 10-2015-0112805 | A | |
| JP | 2000-66132 | A | 03 March 2000 | (Family: none) | | | |
| JP | 2002-511596 | A | 16 April 2002 | US | 6497484 | B1 | |
| | | | | column 3, line 21 to column 5, line 26, fig. 1-4 | | | |
| | | | | WO | 1999/053346 | A2 | |
| | | | | EP | 1071975 | A2 | |
| JP | 2021-173873 | A | 01 November 2021 | WO | 2021/215271 | A1 | |
| JP | 2013-222025 | A | 28 October 2013 | (Family: none) | | | |
| JP | 7-191274 | A | 28 July 1995 | US | 5663833 | A | |
| | | | | entire text, all drawings | | | |
| | | | | EP | 660155 | A1 | |
| JP | 2020-177221 | A | 29 October 2020 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011253128 A